# EUROPÄISCHE PATENTSCHRIFT

(11) **EP 3 118 238 B1**
(45) Veröffentlichungstag und Bekanntmachung des Hinweises auf die Patenterteilung: **18.03.2020**
(21) Anmeldenummer: 16185935.0
(22) Anmeldetag: 31.07.2013
(51) Int. Cl.: C08K 5/00, C08K 5/05, C08K 5/06, C08K 5/07, C08K 5/10, C08K 5/5475, C08L 63/00, C08L 75/04, C08G 59/40

(54) **FLÜSSIGE HÄRTER ZUR HÄRTUNG VON EPOXIDHARZEN (I)**
LIQUID HARDENERS FOR CURING EPOXY RESINS (I)
DURCISSEUR LIQUIDE POUR RESINES EPOXY (I)

(30) Priorität: 02.08.2012 DE 102012015316; 02.08.2012 DE 102012015315
(43) Veröffentlichungstag der Anmeldung: 18.01.2017
(62) Teilanmeldung aus: 13742647.4
(73) Patentinhaber: AlzChem Trostberg GmbH, 83308 Trostberg (DE)
(72) Erfinder: STROBEL, Sylvia, 84518 Garching (DE); EBNER, Martin, 86438 Kissing (DE); RITZINGER, Florian, 84518 Garching (DE); KRIMMER, Hans-Peter, 84558 Kirchweidach (DE)
(74) Vertreter: Weickmann & Weickmann PartmbB

(56) Entgegenhaltungen:
- EP-A1- 0 108 712
- EP-A1- 2 060 592
- EP-A1- 2 426 160
- WO-A1-2011/134168
- DE-A1- 2 743 015
- GB-A- 1 260 896

## Beschreibung

Die vorliegende Erfindung betrifft neuartige flüssige Härter zur Härtung von härtbaren Polymerharzen, insbesondere von Epoxidharzen, sowie Epoxidharz-Zusammensetzungen umfassend diese Härter für die Herstellung von Faserverbundwerkstoffen.

Die Verwendung von duroplastischen Epoxidharzen ist aufgrund ihrer guten Chemikalienbeständigkeit, ihrer sehr guten thermischen und dynamisch-mechanischen Eigenschaften sowie ihres hohen elektrischen Isolationsvermögens weit verbreitet. Darüber hinaus zeigen Epoxidharze eine gute Haftung auf vielen Substraten und sind somit bestens für den Einsatz in Faserverbundwerkstoffen (Composites) geeignet. Für den Einsatz in Faserverbundwerkstoffen sind sowohl eine gute Benetzung der Faser, d. h. eine niedrige Viskosität der gewählten Harzformulierung zur Compositherstellung als auch hohe mechanische Eigenschaften nach Aushärtung wünschenswert.

Zur Herstellung von Formteilen aus Faserverbundwerkstoffen werden verschiedene Verfahren genutzt, wie bspw. das Prepregverfahren, verschiedene Infusions- oder Injektionsverfahren, hierbei insbesondere das RTM-Verfahren (Resin Transfer Molding). Von diesen Verfahren haben insbesondere die Infusions- oder Injektionsverfahren in den letzten Jahren an Bedeutung gewonnen. So werden beispielsweise in den Infusionsverfahren, in einem offenen Werkzeug befindliche trockene Verstärkungsmaterialien, wie beispielsweise Fasermatten, Vliesstoffe, Gewebe oder Gewirke, mit einer dichten Vakuumfolie abgedeckt und nach Anlegen des Vakuums über Verteilerkanäle mit Harzformulierungen getränkt. Diese Verfahren weisen den Vorteil auf, dass große Elemente mit komplizierter Geometrie in kurzer Zeit geformt werden können.

Die Epoxidharzformulierung für ein Infusions- oder Injektionsverfahren muss eine niedrige Viskosität aufweisen, um die Imprägnierung der Fasermaterialien im Vakuum in entsprechender Zeit zu ermöglichen. Werden Harzformulierungen mit zu hohen Viskositäten verwendet oder werden Harzformulierungen verwendet, die während der Injektionsperiode zu schnell zu hohe Viskositäten erzeugen, werden unimprägnierte Teile und sonstige Fehlstellen im entstehenden Composit erhalten.

Die Härtung von Epoxidharzen verläuft nach unterschiedlichen Mechanismen. Neben der Härtung mit Phenolen oder Anhydriden wird häufig die Härtung mit Aminen durchgeführt. Diese Stoffe sind meist flüssig und lassen sich sehr gut mit Epoxidharzen vermengen. Aufgrund der hohen Reaktivität und damit sehr niedrigen Latenz werden derartige Epoxidharz-Zusammensetzungen zweikomponentig ausgeführt. Dies bedeutet, dass Harz (A-Komponente) und Härter (B-Komponente) getrennt aufbewahrt werden und erst kurz vor Gebrauch im korrekten Verhältnis gemischt werden. Hierbei bedeutet "latent", dass eine Mischung der Einzelkomponenten unter definierten Lagerbedingungen stabil vorliegt. Diese zweikomponentigen Harzformulierungen werden auch als sogenannte kalthärtende Harzformulierungen bezeichnet, wobei die dafür verwendeten Härter meist aus der Gruppe der Amine oder Amidoamine gewählt werden.

Einkomponentige, heißhärtende Epoxidharzformulierungen sind hingegen gebrauchsfähig fertig vorkonfektioniert, das heißt, dass Epoxidharz und Härter werkseitig vermischt vorliegen. Mischungsfehler der Einzelkomponenten bei Gebrauch vor Ort sind daher ausgeschlossen. Voraussetzung dafür bilden latente Härtersysteme, welche bei Raumtemperatur mit dem Epoxidharz nicht reagieren (lagerfähig sind), jedoch unter Erwärmung je nach Energieeintrag bereitwillig ausreagieren. Für solche einkomponentigen Epoxidharz-Formulierungen ist beispielsweise Dicyandiamid ein besonders geeigneter und auch kostengünstiger Härter. Unter Umgebungsbedingungen können entsprechende Harz-Härter-Mischungen bis zu zwölf (12) Monaten gebrauchsfähig gelagert werden.

Leider weisen diese Epoxidharzmischungen mit hoch latentem Dicyandiamid oder anderen hoch latenten Härtern den Nachteil auf, dass die Härter in Epoxidharzen nur wenig löslich sind und im Infusions- oder Injektionsverfahren zur Herstellung von Faserverbundwerkstoffen an den Einlassstellen für das Harz von den Fasermatten festgehalten und herausgefiltert werden. Somit wird eine vor Anwendung homogene Mischung des Härters in den Harzen im Composit unterbunden. Hierdurch wird eine Aushärtung des gesamten Composits verhindert.

In der Patentliteratur werden wenige Vorschläge zur Überwindung dieser Nachteile beschrieben. So wird sowohl in der deutschen Patentanmeldung DE 27 43 015 A1 als auch in dem österreichischen Patent AT 351 772 jeweils ein Verfahren zum Härten von Epoxidharzen unter Verwendung von wässrigen Lösungen von Cyanamid oder einem Gemisch von Cyanamid mit bis zu 75 Gew.-% Harnstoff beschrieben. Die Härtung kann auch unter Verwendung von katalytischen Mengen Beschleunigern durchgeführt werden. Entsprechend hergestellte Epoxidharz-Zusammensetzungen können zur Herstellung von vorimprägnierten Glasfasergeweben, sogenannten Prepregs verwendet werden. Somit werden mit diesen beiden Patentdokumenten flüssige wässrige Härterlösungen beschrieben. Nachteilig hierbei ist jedoch, dass die genannten Härter Lösungen sind, deren Lösemittel Wasser während des Härtungsprozesses entfernt werden muss, um nicht Qualitätseinbußen des fertig gehärteten Formstückes hinzunehmen. Dieser Nachteil ist unabhängig von der Wahl eines Lösemittels, da diese Lösemittel während der Härtung immer entfernt werden müssen.

Weiterhin werden mit den Patentanmeldungen WO 2012 113879 und WO 2012 113878 flüssige Härter zur Härtung von härtbaren Polymerharzen beschrieben, die Cyanamid und mindestens ein Harnstoffderivat gegebener Formel umfassen.

Der vorliegenden Erfindung lag die Aufgabe zugrunde, neuartige Härter zur Härtung von härtbaren Polymerharzen, insbesondere härtbare Epoxidharze, sowie Epoxidharz-Zusammensetzungen, bereitzustellen, die zur Herstellung von Composits und faserverstärkten Matrices verwendet werden können. Hierbei bestand weiterhin die Notwendigkeit, dass solche Härter die Vorteile der bekannten Aminhärter und der bekannten Dicyandiamid-Pulverhärter in sich vereinen, ohne deren Nachteile, wie geringe Latenz oder Filtration der Partikel zu übernehmen. Diese neuen Härter sollen eine hohe Latenz somit eine hohe Lagerstabilität unterhalb der Härtungstemperatur sowie eine hohe Reaktivität bei der Härtungstemperatur aufweisen, eine vollständig Vernetzung des Epoxidharzes ermöglichen, in Epoxidharzen löslich oder vollständig mischbar sein und zum Einsatz in Infusions-, Injektions- oder RTM-Verfahren geeignet sein.

Gelöst werden diese Aufgaben durch flüssige Härter gemäß Anspruch 1. Somit ist gemäß einer ersten Ausführung ein flüssiger Härter zur Härtung von Polymerharzen, insbesondere von härtbaren Polymerharzen, insbesondere härtbare Epoxydharze, Polyurethanharze und Mischungen hiervon, Gegenstand der vorliegenden Erfindung, der a) Cyanamid, b) mindestens ein Harnstoffderivat der Formel (I) und c) mindestens einen Viskositätsmodifikator ausgewählt aus der Gruppe der Mono-, Di- und oder Polyole, Ether, Polyether, Polyetherpolyole, Ketone, Aldehyde, Nitrile, Carbonsäureester oder Mischungen hiervon umfasst, wobei die Harnstoffderivate folgende Struktur aufweisen 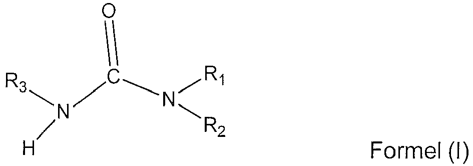 wobei für die Reste gleichzeitig oder unabhängig voneinander gilt und mindestens ein Rest R¹, R², R³ ungleich Wasserstoff ist:
- R¹, R² =: gleichzeitig oder unabhängig voneinander Wasserstoff, C1- bis C15-Alkyl, C3- bis C15-Cycloalkyl oder gemeinsam unter Bildung eines Ringes C3- bis C10-Alkylen;
- R³ =: Wasserstoff, C1- bis C15-Alkyl, C3- bis C15-Cycloalkyl, Aryl, Arylalkyl,
mit -NHC(O)NR¹R² substituiertes C1- bis C15-Alkyl,
mit -NHC(O)NR¹R² substituiertes C3- bis C15-Cycloalkyl,
mit -NHC(O)NR¹R² substituiertes Aryl oder
mit -NHC(O)NR¹R² substituiertes Arylalkyl.

Erfindungswesentlich umfasst ein flüssiger Härter gemäß der vorliegenden Erfindung Cyanamid (CAS 420-04-2). Überraschenderweise wurde gefunden, dass intensive Vermischungen von Cyanamid und mindestens einem Harnstoffderivat gemäß Formel (I) mit den oben angegebenen Bedeutungen flüssige bis semiflüssige Gemische mit niedrigen Schmelzpunkten (im Vergleich zu den Ausgangsstoffen) ergeben, die sich bei Raumtemperatur vollständig in Epoxidharz lösen bzw. vollständig mischen. Obwohl analytisch nach wie vor separate Stoffe vorliegen, zeigen DSC-Analysen endotherme Schmelzpeaks von Einstoffsystemen. Diese Gemische können ohne wesenliche Beeinflussung ihres flüssigen Zustandes mit Viskositätsmodifikatoren aus der Gruppe der Mono-, Di- und oder Polyole, Ether, Polyether, Etheralkohole, Polyetherpolyole, Ketone, Aldehyde, Nitrile, Carbonsäureester oder Mischungen hiervon gemischt werden und sind hervorragend zur Härtung von Polymerharzen, insbesondere von härtbaren Polymerharzen, insbesondere härtbare Epoxydharze, härtbare Polyurethanharze oder Mischungen hiervon, geeignet. Ihre Wirkungsweise im Epoxidharz ist vergleichbar zu den Härtungseigenschaften von mit Imidazolen beschleunigten Dicyandiamid und liegt bei < 100 °C. Trotzdem bleibt bei Raumtemperatur eine Latenz von mehreren Tagen bis mehreren Wochen erhalten.

Überraschenderweise hat sich zudem gezeigt, dass erfindungsgemäße flüssige Härter im Vergleich zu Pulvermischungen bzw. Suspensionen gleicher Zusammensetzung durchweg bei niedrigeren Temperaturen eine Härtung der Polymerharze initiieren und somit eine kürzere Zeit zur Herstellung von Formteilen ermöglichen.

Zudem kann durch die erfindungsgemäßen flüssigen Härter die Viskosität der fertig formulierten Harze, insbesondere von Epoxidharz-Zusammensetzungen, wesentlich beinflusst werden, wodurch diese Härter für den Einsatz in Infusionsharzen oder Harzen für die Herstellung von Prepregs hervorragend geeignet sind, insbesondere da eine erhebliche Zeitersparnis zur Herstellung von Formteilen ermöglicht wird. So kann beispielsweise zur Herstellung von Prepregs ein Viskositätsmodifikator verwendet werden, der eine Viskositätserhöhung der resultierenden Harz-Zusammensetzung bewirkt. Hierdurch wird eine besonders gut Haftung der resultierenden Harz-Zusammensetzung auf den Trägermatrialien erreicht. Auf der anderen Seite kann die Viskosität der herzustellenden Harz-Zusammensetzung durch Zusatz geeigneter Viskositätsmodifikatoren herabgetzt werden, indem den erfindungsgemäßen flüssigen Härter ein entsprechender Viskositätsmodifikator zugesetzt wird. Solche flüssigen Härter mit viskositätserniedigende Eigenschaften sind beonders gut in Infusions- oder Injektionsverfahren einsetzbar. Diese Viskositätsmodifikatoren können den erfindungsgemäßen flüssigen Härtern hinzugefügt werden, ohne dass deren flüssiger Zustand wesentlich beeinflusst wird. Hierbei war es besonders überraschend, dass diese Modifikatoren die Latenz der mit den flüssigen Härtern versetzten Harz-Zusammensetzungen in vielen Fällen nicht negativ beeinflusst. Es konnte vielmehr auch gezeigt werden, dass die Latenz erhöht und somit die Lagerfähigkeit der resultierenden Harz-Zusammensetzungen verbessert werden konnte.

Hervorzuheben ist dabei, dass die üblichen Nachteile von sonstigen flüssigen Härtern, wie eine sehr niedrige Latenz und somit sehr hohe Reaktivität bereits bei Raumtemperatur, nicht beobachtet wird. Zudem können mit dem erfindungsgemäßen Härter gehärtete Harze mit im Vergleich zu Aminhärtern gehärteten Harzen hohen Glasübergangstemperaturen bereitgestellt werden.

Insgesamt kann somit ein flüssiger Härter zur Verfügung gestellt werden, der aufgrund der hohen Latenz in den Polymerharz-Zusammensetzungen sowie der hohen Reaktivität in den Polymerharz-Zusammensetzungen bei der Härtungstemperatur hervorragend für den Einsatz in Infusions- oder Injektionsverfahren geeignet ist.

In Weiterbildung der vorliegenden Erfindung kann dabei vorgesehen sein, dass der flüssige Härter Cyanamid und mindestens ein Harnstoffderivat der Formel (I) oder Mischungen dieser Harnstoffderivate in einem molaren Verhältnis
Cyanamid : Harnstoffderivat oder Harnstoffderivatmischung von 1 : 1 bis 4 : 1 umfasst. Insbesondere ist gemäß der vorliegenden Erfindung vorgesehen, dass das molare Verhältnis Cyanamid : Harnstoffderivat oder Harnstoffderivatmischung 1 : 1 bis 3 :1 und weiterhin bevorzugt 1 : 1 bis 2 : 1 und ganz bevorzugt 2 : 1 bis 4 : 1 beträgt.

In Gegenwart mindestens eines Viskositätsmodifikators der Gruppe der Mono-, Di- und oder Polyole, Ether, Polyether, Etheralkohole, Polyetherpolyole, Ketone, Aldehyde, Nitrile, Carbonsäureester oder Mischungen hiervon können die molaren Verhältnisse von Cyanamid : Harnstoffderivat auch außerhalb des bevorzugten Bereichs von 1 : 1 bis 4 : 1 liegen. Beispielsweise sind molare Verhältnisse von Cyanamid : Harnstoffderivat von 0,1 bis < 1 : 1, insbesondere von 0,2 bis < 1 : 1, möglich, aber auch molare Verhältnisse von Cyanamid : Harnstoffderivat von > 4 : 1 bis 20 :1, insbesondere > 4 : 1 bis 10 : 1.

Dabei soll unter einem flüssigen Härter gemäß der vorliegenden Erfindung ein Härter verstanden sein, der einen Schmelzpunkt Sₘ mit Sₘ < 20 °C (Normaldruck) aufweist oder bei einer Temperatur von 20 °C (Normaldruck) flüssig vorliegt und eine Viskosität von weniger als 1 Pa*s aufweist. Die erfindungsgemäßen flüssigen Härter weisen vorzugsweise eine Viskosität von ≤ 100 mPa*s, mehr bevorzugt von < 20 mPa*s und noch mehr bevorzugt von ≤ 12 mPa*s bei 25 °C auf. Besonders bevorzugt sind jedoch solche flüssigen Härter, die einen Schmelzpunkt Sₘ mit Sₘ < 10 °C (Normaldruck), ganz besonders bevorzugt einen Schmelzpunkt Sₘ mit Sₘ < 0 °C (Normaldruck), aufweisen oder bei einer Temperatur von 10 °C (Normaldruck), ganz besonders bevorzugt bei einer Temperatur von 0 °C (Normaldruck), flüssig vorliegen und eine Viskosität von weniger als 1 Pa*s aufweisen.

Hervorzuheben ist hierbei, dass diese Härter als solche flüssig sind und insbesondere neben Cyanamid, mindestens einem Harnstoffderivat oder Mischungen hiervon und mindestens einem Viskositätsmodifikator kein Lösemittel oder Lösungsvermittler umfassen und somit lösemittelfrei oder lösungsvermittlerfrei sind. Dabei ist im Zusammenhang mit der vorliegenden Erfindung unter einem Lösemittel oder Lösungsvermittler jedwedes anorganische oder organische Lösemittel oder Lösemittel oder Lösungsvermittler oder Mischungen hiervon zu verstehen, das/der bei der chemischen Synthese oder in der Analytik zur Herstellung einer Lösung verwendet wird. Viskositätsmodifikatoren gemäß der vorliegenden Erfindung sind jedoch keine Lösemittel. Als lösemittelfrei oder lösungsvermittlerfrei wird im Zusammenhang mit der vorliegenden Erfindung ein Härter verstanden, der im Wesentlichen frei von Lösemitteln oder Lösungsvermittlern ist und herstellungsbedingt höchstens 1,0 Gew.-% Lösemittel oder Lösungsvermittler enthält.

In einer alternativen Ausführungsform ist es aber auch möglich, dass die Härter ein Lösemittel, insbesondere Wasser enthalten. Die Zugabe von Lösemittel ist dabei nicht erforderlich, um die Gemische flüssig zu machen, sondern kann aus anderen verfahrenstechnischen Erfordernissen günstig sein.

Weiterhin soll im Zusammenhang mit der vorliegenden Erfindung unter C1- bis C15-Alkyl ein linearer oder verzweigter Alkylrest mit einer Kettenlänge bis zu 15 Kohlenstoffatomen verstanden sein, der insbesondere die allgemeinen Formel CₙH₂ₙ₊₁ aufweist, wobei n = 1 bis 15 bedeuted. Dabei ist bevorzugt vorgesehen, dass C1- bis C15-Alkyl Methyl, Ethyl, Propyl, Butyl, Pentyl, Hexyl, Heptyl, Octyl, Nonyl oder Decyl bedeutet, wobei diese Alkylreste weiterhin bevorzugt auch unverzweigt, einfach verzweigt, mehrfach verzweigt oder alkylsubstituiert sein können.

Bevorzugt sind solche C1- bis C15-Alkylreste, die ihrerseits einfach oder mehrfach alkylsubstituiert, insbesondere mit C1- bis C5-Alkyl substituiert sind. C1- bis C5-Alkyl gemäß der vorliegenden Erfindung kann weiterhin bevorzugt Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl oder 1-Ethylpropyl bedeuten. Damit kann C1- bis C15-Alkyl gemäß der vorliegenden Erfindung insbesondere auch 1-Methylethyl, 1-Methylpropyl, 1-Methylbutyl, 1-Methylpentyl, 1-Methylhexyl, 1-Methylheptyl, 1-Methyloctyl, 1-Methylnonyl, 1-Methyldecanyl, 1-Ethylpropyl, 1-Ethylbutyl, 1-Ethylpentyl, 1-Ethylhexyl, 1-Ethylheptyl, 1-Ethyloctyl, 1-Ethylnonyl, 1-Ethyldecanyl, 2-Methylpropyl, 2-Methylbutyl, 2-Methylpentyl, 2-Methylhexyl, 2-Methylheptyl, 2-Methyloctyl, 2-Methylnonyl, 2-Methyldecanyl, 2-Ethylpropyl, 2-Ethylbutyl, 2-Ethylpentyl, 2-Ethylhexyl, 2-Ethylheptyl, 2-Ethyloctyl, 2-Ethylnonyl, 2-Ethyldecanyl, 1,1-Dimethylethyl, 1,1-Dimethylpropyl, 1,1-Dimethylbutyl, 1,1-Dimethylpentyl, 1,1-Dimethylhexyl, 1,1-Dimethylheptyl, 1,1-Dimethyloctyl, 1,1-Dimethylnonyl, 1,1-Dimethyldecanyl, 1,2-Dimethylpropyl, 1,2-Dimethylbutyl, 1,2-Dimethylpentyl, 1,2-Dimethylhexyl, 1,2-Dimethylheptyl, 1,2-Dimethyloctyl, 1,2-Dimethylnonyl, 1,2-Dimethyldecanyl, 2-Ethyl-1-methylbutyl, 2-Ethyl-1-methylpentyl, 2-Ethyl-1-methylhexyl, 2-Ethyl-1-methylheptyl, 2-Ethyl-1-methyloctyl, 2-Ethyl-1-methylnonyl, 2-Ethyl-1-methyldecanyl, 1-Ethyl-2-methylpropyl, 1-Ethyl-2-methylbutyl, 1-Ethyl-2-methylpentyl, 1-Ethyl-2-methylhexyl, 1-Ethyl-2-methylheptyl, 1-Ethyl-2-methyloctyl, 1-Ethyl-2-methylnonyl oder 1-Ethyl-2-methyldecanyl bedeuten.

Weiterhin bevorzugt kann ein C1- bis C15-Alkylrest, insbesondere Methyl, Ethyl, Propyl, Butyl, seinerseits auch mit einem C3- bis C15-Cycloalkylrest substituiert sein, wobei C3- bis C15-Cycloalkyl die unten wiedergegebene Bedeutung aufweist. Damit kann C1- bis C15-Alkyl insbesondere auch C3- bis C15-Cycloalkyl-methyl, 1-(C3- bis C15-Cycloalkyl)-1-ethyl, 2-(C3- bis C15-Cycloalkyl)-1-ethyl, 1-(C3- bis C15-Cycloalkyl)-1-propyl, 2-(C3- bis C15-Cycloalkyl)-1-propyl oder 3-(C3- bis C15-Cycloalkyl)-1-propyl bedeuten, wobei C3- bis C15-Cycloalkyl die unten wiedergegeben Beutung aufweist.

Im Zusammenhang mit der vorliegenden Erfindung soll unter C3- bis C15-Cycloalkyl ein monocyclischer oder bicyclischer Cycloalkylrest mit 3 bis 15 Kohlenstoffatomen verstanden sein, insbesondere ein Cycloalkylrest, der die allgemeinen Formel CₙH₂ₙ₋₁ mit n = 3 bis 15 aufweist. Weiterhin bevorzugt kann C3- bis C15-Cycloalkyl Cyclopropyl, Cyclobutyl, Cyclopentyl, Cyclohexyl oder Cycloheptyl bedeuten, wobei diese Cycloalkylreste ihrerseits weiterhin bevorzugt einfach oder mehrfach mit C1- bis C5-Alkylresten der oben wiedergegebenen Bedeutung substituiert sein können. Weiterhin bevorzugt kann damit C3- bis C15-Cycloalkyl auch 1-Methyl-1-Cyclopropyl, 1-Methyl-1-Cyclobutyl, 1-Methyl-1-Cyclopentyl, 1-Methyl-1-Cyclohexyl, 1-Methyl-1-Cycloheptyl, 2-Methyl-1-Cyclopropyl, 2-Methyl-1-Cyclobutyl, 2-Methyl-1-Cyclopentyl, 2-Methyl-1-Cyclohexyl, 2-Methyl-1-Cycloheptyl, 3-Methyl-1-Cyclobutyl, 3-Methyl-1-Cyclopentyl, 3-Methyl-1-Cyclohexyl, 3-Methyl-1-Cycloheptyl, 4-Methyl-1-Cyclohexyl, 4-Methyl-1-Cycloheptyl, 1,2-Dimethyl-1-Cyclopropyl, 2,2-Dimethyl-1-Cyclopropyl, 2,3-Dimethyl-1-Cyclopropyl, 1,2-Dimethyl-1-Cyclobutyl, 1,3-Dimethyl-1-Cyclobutyl, 2,2-Dimethyl-1-Cyclobutyl, 2,3-Dimethyl-1-Cyclobutyl, 2,4-Dimethyl-1-Cyclobutyl, 3,3-Dimethyl-1-Cyclobutyl, 1,2-Dimethyl-1-Cyclopentyl, 1,3-Dimethyl-1-Cyclopentyl, 2,2-Dimethyl-1-Cyclopentyl, 2,3-Dimethyl-1-Cyclopentyl, 2,4-Dimethyl-1-Cyclopentyl, 2,5-Dimethyl-1-Cyclopentyl, 3,3-Dimethyl-1-Cyclopentyl, 3,4-Dimethyl-1-Cyclopentyl, 1,2-Dimethyl-1-Cyclohexyl, 1,3-Dimethyl-1-Cyclohexyl, 1,4-Dimethyl-1-Cyclohexyl, 1,5-Dimethyl-1-Cyclohexyl, 1,6-Dimethyl-1-Cyclohexyl, 2,2-Dimethyl-1-Cyclohexyl, 2,3-Dimethyl-1-Cyclohexyl, 2,4-Dimethyl-1-Cyclohexyl, 2,5-Dimethyl-1-Cyclohexyl, 2,6-Dimethyl-1-Cyclohexyl, 3,3-Dimethyl-1-Cyclohexyl, 3,4-Dimethyl-1-Cyclohexyl, 3,5-Dimethyl-1-Cyclohexyl, 3,6-Dimethyl-1-Cyclohexyl, 4,4-Dimethyl-1-Cyclohexyl, 1,2,2-Trimethyl-1-Cyclopropyl, 1,2,3-Trimethyl-1-Cyclopropyl, 1,2,2-Trimethyl-1-Cyclobutyl, 1,3,3-Trimethyl-1-Cyclobutyl, 1,2,3-Trimethyl-1-Cyclobutyl, 2,2,3-Trimethyl-1-Cyclobutyl, 2,2,4-Trimethyl-1-Cyclobutyl, 1,2,2-Trimethyl-1-Cyclopentyl, 1,2,3-Trimethyl-1-Cyclopentyl, 1,2,4-Trimethyl-1-Cyclopentyl, 1,2,5-Trimethyl-1-Cyclopentyl, 1,3,3-Trimethyl-1-Cyclopentyl, 1,3,4-Trimethyl-1-Cyclopentyl, 1,3,5-Trimethyl-1-Cyclopentyl, 2,2,3-Trimethyl-1-Cyclopentyl, 2,2,4-Trimethyl-1-Cyclopentyl, 2,2,5-Trimethyl-1-Cyclopentyl, 2,3,3-Trimethyl-1-Cyclopentyl, 2,3,4-Trimethyl-1-Cyclopentyl, 2,3,5-Trimethyl-1-Cyclopentyl, 2,3,3-Trimethyl-1-Cyclopentyl, 2,4,4-Trimethyl-1-Cyclopentyl, 2,4,5-Trimethyl-1-Cyclopentyl, 2,5,5-Trimethyl-1-Cyclopentyl, 3,3,4-Trimethyl-1-Cyclopentyl, 3,3,5-Trimethyl-1-Cyclopentyl, 3,4,5-Trimethyl-1-Cyclopentyl, 3,4,4-Trimethyl-1-Cyclopentyl, 1,2,2-Trimethyl-1-Cyclohexyl, 1,2,3-Trimethyl-1-Cyclohexyl, 1,2,4-Trimethyl-1-Cyclohexyl, 1,2,5-Trimethyl-1-Cyclohexyl, 1,2,6-Trimethyl-1-Cyclohexyl, 1,3,3-Trimethyl-1-Cyclohexyl, 1,3,4-Trimethyl-1-Cyclohexyl, 1,3,5-Trimethyl-1-Cyclohexyl, 1,3,6-Trimethyl-1-Cyclohexyl, 1,4,4-Trimethyl-1-Cyclohexyl, 2,2,3-Trimethyl-1-Cyclohexyl, 2,2,4-Trimethyl-1-Cyclohexyl, 2,2,5-Trimethyl-1-Cyclohexyl, 2,2,6-Trimethyl-1-Cyclohexyl, 2,3,3-Trimethyl-1-Cyclohexyl, 2,3,4-Trimethyl-1-Cyclohexyl, 2,3,5-Trimethyl-1-Cyclohexyl, 2,3,6-Trimethyl-1-Cyclohexyl, 2,4,4 -Cyclohexyl, 2,4,5-Trimethyl-1-Cyclohexyl, 2,4,6-Trimethyl-1-Cyclohexyl, 2,5,5-Trimethyl-1-Cyclohexyl, 2,5,6-Trimethyl-1-Cyclohexyl, 2,6,6-Trimethyl-1-Cyclohexyl, 3,3,4-Trimethyl-1-Cyclohexyl, 3,3,5-Trimethyl-1-Cyclohexyl, 3,3,6-Trimethyl-1-Cyclohexyl, 3,4,4-Trimethyl-1-Cyclohexyl, 3,4,5-Trimethyl-1-Cyclohexyl, 3,4,6-Trimethyl-1-Cyclohexyl, 3,5,6-Trimethyl-1-Cyclohexyl, 1,2,3,3-Tetramethyl-1-Cyclopropyl, 2,2,3,3-Tetramethyl-1-Cyclopropyl, 1,2,2,3-Tetramethyl-1-Cyclopropyl, 1,2,2,3-Tetramethyl-1-Cyclobutyl, 1,2,3,3-Tetramethyl-1-Cyclobutyl, 2,2,3,3-Tetramethyl-1-Cyclobutyl, 2,3,3,4-Tetramethyl-1-Cyclobutyl, 1,2,2,3-Tetramethyl-1-Cyclopentyl, 1,2,2,4-Tetramethyl-1-Cyclopentyl, 1,2,2,5-Tetramethyl-1-Cyclopentyl, 1,2,3,3-Tetramethyl-1-Cyclopentyl, 1,2,3,4-Tetramethyl-1-Cyclopentyl, 1,2,3,5-Tetramethyl-1-Cyclopentyl, 1,2,5,5-Tetramethyl-1-Cyclopentyl, 2,2,3,3-Tetramethyl-1-Cyclopentyl, 2,2,3,3-Tetramethyl-1-Cyclohexyl, 2,2,4,4-Tetramethyl-1-Cyclohexyl, 2,2,5,5-Tetramethyl-1-Cyclohexyl, 3,3,4,4-Tetramethyl-1-Cyclohexyl, 3,3,5,5-Tetramethyl-1-Cyclohexyl, 1-Ethyl-1-Cyclopropyl, 1-Ethyl-1-Cyclobutyl, 1-Ethyl-1-Cyclopentyl, 1-Ethyl-1-Cyclohexyl), 1-Ethyl-1-Cycloheptyl, 2-Ethyl-1-Cyclopropyl, 2-Ethyl-1-Cyclobutyl, 2-Ethyl-1-Cyclopentyl, 2-Ethyl-1-Cyclohexyl, 2-Ethyl-1-Cycloheptyl, 3-Ethyl-1-Cyclobutyl, 3-Ethyl-1-Cyclopentyl, 3-Ethyl-1-Cyclohexyl, 3-Ethyl-1-Cycloheptyl, 4-Ethyl-1-Cyclohexyl oder 4-Ethyl-1-Cycloheptyl bedeuten.

Gemäß der vorliegenden Erfindung kann R¹ und R² auch gemeinsam C3- bis C10-Alkylen bedeuten, wobei R¹ und R² gemeinsam mit dem Stickstoff des Harnstoffderivates einen stickstoffhaltigen Ring bilden. Insbesondere kann hierbei vorgesehen sein, dass R¹ und R² zusammen Ethylen, Propylen, Butylen, Pentylen oder Hexylen bedeuten, wobei diese Alkylenreste ihrerseits gegebenenfalls einfach oder mehrfach mit Alkylresten substituiert sein können. Dabei bildet R¹ und R² gemeinsam mit dem Stickstoff des Harnstoffderivates ein Aziridin, Azetidin, Azolidin, Azinan oder Azepan, das seinerseits gegebenenfalls einfach oder mehrfach mit C1- bis C5-Alkylresten der oben wiedergegebenen Bedeutung substituiert sein kann.

Gemäß der vorliegenden Erfindung bedeutet -NHC(O)NR¹R² ein 1-Ureayl-Rest, der am Stickstoff N3 mit den Resten R¹ und R² substituiert ist, wobei R¹ und R² die oben wiedergegebenen Bedeutungen aufweisen, und der über den Stickstoff N1 an einem Grundgerüst gebunden ist.

Halogen bedeutet gemäß der vorliegenden Erfindung insbesondere Fluor, Chlor oder Brom.

Gemäß der vorliegenden Erfindung bedeutet Aryl insbesondere einen aromatischen Aryl-Rest mit 3 bis 20 Kohlenstoffatomen, der weiterhin bevorzugt seinerseits einfach oder mehrfach mit einem C1- bis C5-Alkyl-Rest der oben wiedergegebenen Bedeutung substituiert sein kann. Besonders bevorzugt kann vorgesehen sein, dass als Aryl-Rest ein Benzolrest, Naphthalinrest, Anthracenrest oder Perylenrest verwendet wird, der seinerseits einfach oder mehrfach mit einem C1- bis C5-Alkyl-Rest der oben wiedergegebenen Bedeutung substituiert sein kann. Damit bedeutet Aryl insbesondere Toluyl, Xylenyl, Pseudocumolyl oder Mesitylenyl.

Gemäß der vorliegenden Erfindung bedeutet Arylalkyl ein C1- C15-Alkyl-Rest der oben wiedergegebene Bedeutung, der mit einem Aryl-Rest der oben wiedergegebenen Bedeutung substituiert ist. Insbesondere kann Arylalkyl einen Benzylrest bedeuten.

Besonders bevorzugt umfassen erfindungsgemäße flüssige Härter mindestens ein aliphatisches Harnstoffderivat gemäß Formel (I). In diesen aliphatischen Harnstoffderivaten gemäß Formel (I) bedeutet R¹ und R² gleichzeitig oder unabhängig voneinander Wasserstoff oder C1- bis C15-Alkyl und R³ hat die Bedeutung Wasserstoff, C1- bis C15-Alkyl, C3- bis C15-Cycloalkyl, mit -NHC(O)NR¹R² substituiertes C1- bis C15-Alkyl oder mit -NHC(O)NR¹R² substituiertes C1- bis C15-Cycloalkyl.

Besonders bevorzugt umfassen die erfindungsgemäßen flüssigen Härter mindestens ein Harnstoffderivat der Formel (I), in welchem mindestens einer der Reste R¹ und R² für einen Methylrest stehen. Besonders bevorzugt ist Methylharnstoff, 1,3-Dimethylharnstoff oder 1,1-Dimethylharnstoff (also R¹ = R² = Methyl und R³ = H).

Weiterhin bevorzugt sind aliphatische Harnstoffderivate gemäß Formel (I), in welchen R¹ und R² die oben angegebene Bedeutung, insbesondere Wasserstoff, Methyl oder Ethyl, haben und R³ mit -NHC(O)NR¹R² substituiertes C1- bis C15-Cycloalkyl bedeutet. Ganz besonders bevorzugt sind flüssige Härter umfassend aliphatische Harnstoffderivate gemäß Formel (II) 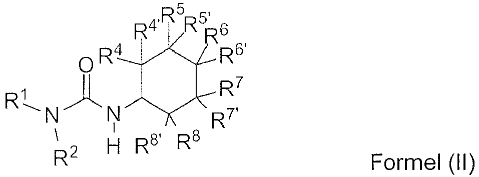 wobei für die Reste gleichzeitig oder unabhängig voneinander gilt:
- R¹, R² =: gleichzeitig oder unabhängig voneinander Wasserstoff, C1- bis C15-Alkyl, C3- bis C15-Cycloalkyl oder gemeinsam unter Bildung eines Ringes C3- bis C10-Alkylen;
- R⁴, R^{4'}, R⁵, R^{5'}, R⁶, R^{6'}, R⁷, R^{7'}, R⁸, R^{8'} =: gleichzeitig oder unabhängig voneinander Wasserstoff, C1- bis C15-Alkyl, C3- bis C15-Cycloalkyl, -NHC(O)NR¹R² oder
mit -NHC(O)NR¹R² substituiertes C1- bis C15-Alkyl.

Weiterhin bevorzugt sind flüssige Härter umfassend aliphatische Harnstoffderivate der Formel (II) in der R¹ und R² gleichzeitig oder unabhängig voneinander Wasserstoff oder Methyl und R⁴, R^{4'}, R⁵, R^{5'}, R⁶, R^{6'}, R¹, R^{7'}, R⁸, R^{8'} gleichzeitig oder unabhängig voneinander Wasserstoff, Methyl, Ethyl, -NHC(O)NR¹R² oder mit -NHC(O)NR¹R² substituiertes Methyl oder Ethyl bedeuten. Besonders bevorzugt ist 1-(N,N-Dimethylurea)-3-(N,N-dimethylureamethyl)-3,5,5-trimethylcyclohexane, nachfolgend auch N'-[3-[[[(dimethylamino)carbonyl]amino]methyl]-3,5,5-trimethylcyclohexyl]-N,N-dimethyl-Harnstoff (also R¹ = R² = R⁵ = R⁵ = R⁷ = Methyl und R^{7'} = -CH₂-NHC(O)N(CH₃)₂ und R⁴ = R^{4'} = R⁶ = R^{6'} = R⁸ = R^{8'} = Wasserstoff).

In einer alternativen Ausführung kann jedoch auch vorgesehen sein, dass ein erfindungsgemäßer flüssiger Härter ein aromatisches Harnstoffderivat umfast. Somit umfasst dieser flüssige Härter mindestens ein Harnstoffderivat der Formel (I) in dem der Rest R³ = Aryl, Arylalkyl, mit -NHC(O)NR¹R² substituertes Aryl oder mit - NHC(O)NR¹R² substituertes Arylalkyl für einen Rest der allgemeinen Formel (III) steht 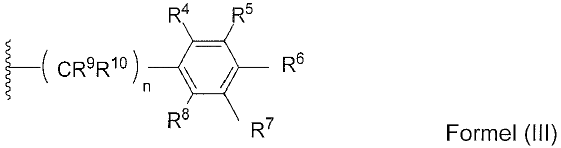 wobei die Reste R¹, R² die oben angegebene Bedeutung aufweisen und für die weiteren Reste gleichzeitig oder unabhängig voneinander gilt:
- R⁴, R⁵, R⁶, R⁷, R⁸ =: Wasserstoff, Halogen, C1- bis C15-Alkyl, C3- bis C15-Cycloalkyl, Aryl, Arylalkyl, -CF₃, -NHC(O)NR¹R², mit -NHC(O)NR¹R² substituiertes C1- bis C15-Alkyl,
mit -NHC(O)NR¹R² substituiertes Aryl oder
mit -NHC(O)NR¹R² substituiertes Arylalkyl;
- R⁹, R¹⁰ =: gleichzeitig oder unabhängig voneinander Wasserstoff oder C1-bis C5-Alkyl;
- n =: eine Zahl zwischen 0 und 10.

Von diesen aromatischen Harnstoffderivaten sind besonders bevorzugt solche Harnstoffderivate in welchen die Reste R⁵, R⁶, R⁷ und R⁸ gleichzeitig oder unabhängig voneinander Wasserstoff, C1- bis C15-Alkyl, -NHC(O)NR¹R², mit - NHC(O)NR¹R² substituiertes C1- bis C15-Aryl oder mit -NHC(O)NR¹R² substituiertes C1- bis C15-Arylalkyl bedeuten.

Weiterhin bevorzugt sind flüssige Härter umfassend Harnstoffderivate der Formel (IV) 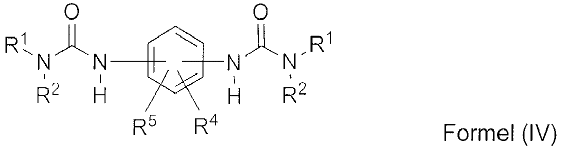 in welcher R¹, R², R⁴ und R⁵ die oben angegebenen Bedeutungen aufweisen und insbesondere gleichzeitig oder unabhängig voneinander Wasserstoff, C1-C15-Alkyl, darstellen. Bevorzugt bedeuten die Reste R¹ und R² in Zusammenhang mit der Formel (IV) ein Methylrest. Besonders bevorzugt ist 1,1'-(4-Methyl-m-phenylen)-bis-(3,3-dimethylharnstoff) und 1,1'-(2-Methyl-m-phenylen)-bis-(3,3-dimethylharnstoff) (also R¹ = R² = R⁵ Methyl und R⁴ Wasserstoff).

Gemäß einer weiteren Ausführungsform kann insbesondere vorgesehen sein, dass die erfindungsgemäßen flüssigen Härter a) Cyanamid, b) zwei voneinander verschiedene Harnstoffderivate der Formeln (I), (II) und/oder (IV) und c) mindestens einen Viskositätsmodifikator umfasst, insbesondere enthält, wobei diese flüssigen Härter weiterhin bevorzugt Cyanamid und zwei voneinander verschiedene Harnstoffderivate der Formel (I), (II) und/oder (IV) in einem molaren Verhältnis
Cyanamid : Harnstoffderivat bzw. Harnstoffderivat-Mischung von 1 : 1 bis 4 : 1 umfassen.

Gemäß einer weiteren Ausführung der Erfindung sind solche flüssigen Härter Gegenstand der Erfindung, die a) Cyanamid, b) mindestens ein Harnstoffderivat ausgewählt aus der Gruppe Harnstoff, 1-Methylharnstoff, 1,1-Dimethylharnstoff, 1,3-Dimethylharnstoff, 3-(3-Chlor-4-methylphenyl)-1,1-dimethylharnstoff, 3-(p-Chlorphenyl)-1,1-dimethylharnstoff, 3-Phenyl-1,1-dimethylharnstoff, 3-(3,4-Dichlorphenyl)-1,1-dimethylharnstoff, 1,1'-(Methylendi-p-phenylen)-bis-(3,3-dimethylharnstoff), 3-(3-Trifluoromethylphenyl)1,1-dimethylharnstoff, 1,1'-(2-Methyl-m-phenylen)-bis-(3,3-dimethylharnstoff) und/oder 1,1'-(4-Methyl-m-phenylen)-bis-(3,3-dimethylharnstoff) und c) mindestens einen Viskositätsmodifikator umfassen, insbesondere enthalten, wobei weiterhin bevorzugt Cyanamid und das Harnstoffderivat bzw. Harnstoffderivat-Mischung in einem molaren Verhältnis von 1 : 1 bis 4 : 1 eingesetzt werden.

Erfindungswesentlich umfassen flüssige Härter gemäß der vorliegenden Erfindung mindestens einen Viskositätsmodifikator ausgewählt aus der Gruppe der Mono-, Di- und/oder Polyole, Ether, Polyether, Etheralkohole, Polyetherpolyole, Ketone, Aldehyde, Nitrile, Carbonsäureester oder Mischungen hiervon. Diese Viskositätsmodifikatoren können je nach Wahl und Anwendungsbereich der herzustellenden Harz-Zusammensetzungen die Viskosität der herzustellenden Harz-Zusammensetzungen erhöhen oder erniedrigen. Besonders bevorzugt sind flüssiger Härter, die einen Viskositätsmodifikator aus der aufgeführten Gruppe umfasst, die ihrerseits einen Siedepunkt von mindestens 100 °C aufweisen. Diese Modifikatoren verbleiben bei der Härtung in den herzustellenden Formteilen und werden vorzugsweise in die Polymermatrix eingebunden bzw. vernetzen diese Polymermatrix zusätzlich.

Als besonders wirkungsvolle Viskositätsmodifikatoren haben sich hierbei Viskositätsmodifikatoren aus der Gruppe der Mono-, Di- und/oder Polyole, Ether, Polyether, Etheralkohole, Polyetherpolyole oder Mischungen hiervon gezeigt, insbesondere solche die ihrerseits einen Siedepunkt von mindestens 100 °C aufweisen.

In einer besonders bevorzugten Ausführung umfasst ein flüssiger Härter mindestens einen Viskositätsmodifikator ausgewählt aus der Gruppe der Mono-, Di- und/oder Polyole, Ether, Polyether, Etheralkohole oder Polyetherpolyole oder Mischungen hiervon gemäß allgemeiner Formel (V) 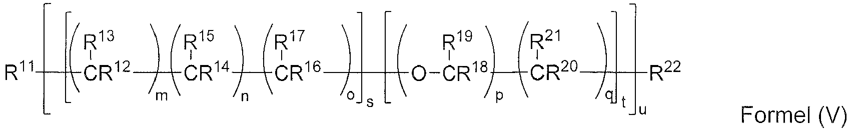 wobei für die Reste gleichzeitig oder unabhängig voneinander gilt:
- R¹¹, R²² =: gleichzeitig oder unabhängig voneinander Wasserstoff, -OH oder C1- bis C15-Alkyl;
- R¹², R¹⁴, R¹⁶, R¹⁸, R²⁰ =: gleichzeitig oder unabhängig voneinander Wasserstoff, -OH oder C1- bis C5-Alkyl;
- R¹³, R¹⁵, R¹⁷, R¹⁹, R²¹ =: gleichzeitig oder unabhängig voneinander Wasserstoff, -OH, -NH₂ oder C1- bis C5-Alkyl;
mit
- m, n, o, s, p, q, t =: gleichzeitig oder unabhängig voneinander eine Zahl von 0 bis 10, insbesondere von 0 bis 5; und wobei
i) m, s, u = gleichzeitig oder unabhängig voneinander eine Zahl von 1 bis 10, insbesondere von 1 bis 5; und/oder
ii) p, t, u = gleichzeitig oder unabhängig voneinander eine Zahl von 1 bis 10, insbesondere von 1 bis 5.

Weiterhin bevorzugt können dabei Monoalkohole aus der Gruppe der C2- bis C10-Aminoalkohole und der C6- bis C12-Alkohole, insbesondere 1-Hexanol, 1-Heptanol, 1-Octanol, 1-Nonanol, 1-Decanol, 2-Hexanol, 2-Heptanol, 2-Octanol, 2-Nonanol, 2-Decanol, 2-Aminoethanol, 3-Aminopropanol, 4-Aminobutanol, 5-Aminopentanol, 6-Aminohexanol, 7-Aminoheptanol, 8-Aminooctanol, 9-Aminononanol, 10-Aminodecanol oder Mischungen hiervon, der Dialkohole aus der Gruppe der C2- bis C12-Alkohole, insbesondere Ethylenglykol, Propylenglykol, Butylenglykol, Pentylenglykol, Hexylenglykol oder Mischungen hiervon, der Trialkohole aus der Gruppe der C3- bis C12-Alkohole, insbesondere 1,2,3-Propantriol, 1,2,3-Butantriol, 1,2,3-Pentantriol, 1,2,3-Hexantriol, 1,2,4-Hexantriol, 1,2,6-Hexantriol oder Mischungen hiervon, der Aldehyde aus der Gruppe der C6- bis C12-Aldehyde, insbesondere Hexanal, Heptanal, Octanal, Nonanal, Decanal oder Mischungen hiervon, der Ketone, insbesondere 2-Pentanon, 3-Pentanon, 2-Hexanon, 3-Hexanon, 2-Heptanon, 3-Heptanon, 2-Octanon, 3-Octanon oder Mischungen hiervon, der Ether, Nitrile, Polyether, Etheralkohole oder Polyetherpolyole aus der Gruppe Dibutylether, Dipentylether, Dihexylether, Diheptylether, Dioctylether, Dinonylether, Didecanylether, Methoxy- und Ethoxyalkohole, Methoxy- und Ethoxydialkohole, Polyethylenglycole, Polypropylenglycole, Polyethylenpropylenglycole, Polyethylenglycolmonoalkylether, insbesondere Polyethylenglycolmonomethylether, Polyethylenglycolmonoethylether, Ethylhexylether, Ethylheptylether, Ethyloctylether, Ethylnonylether, Ethyldecanylether, Benzonitril, Actonitril oder Mischungen hiervon eingesetzt werden.

Zudem hat sich in Untersuchungen herrausgestellt, dass eine bessere Verarbeitung in Infusions- oder Injektionsverfahren aber auch in Prepregverfahren einer Polymerharz-Zusammensetzungen, insbesondere einer Epoxidharz-Zusammensetzung, umfassend einen flüssigen Härter gemäß der hier beschriebenen Art, bereit gestellt werden kann, wenn den flüssigen Härtern weiterhin mindestens ein Härtungsbeschleuniger aus der Klasse der Imidazoline, nachfolgend auch 4,5-Dihydro-1H-Imidazole, oder der Imidazole hinzugefügt wird.

Den erfindungsgemäßen flüssigen Härtern können ohne Beeinflussung ihres flüssigen Zustandes mit Härtungsbeschleunigern aus der Gruppe der Imidazoline gemäß Formel (VI) oder der Imidazole gemäß Formel (VII) gemischt werden und sind hervorragend zur Härtung von Polymerharzen, insbesondere härtbaren Polymerharzen, insbesondere härtbare Epoxydharze, härtbare Polyurethanharze oder Mischungen hiervon, geeignet. Ihre Wirkungsweise im Epoxidharz ist vergleichbar zu den Härtungseigenschaften von mit Imidazolen beschleunigten Dicyandiamid und liegt bei < 100 °C. Trotzdem bleibt bei Raumtemperatur eine Latenz von mehreren Tagen bis mehreren Wochen erhalten.

Somit ist gemäß einer weiteren Ausführung auch ein flüssiger Härter Gegenstand der vorliegenden Erfindung der d) mindestens einen Härtungsbeschleunigern aus der Klasse der Imidazoline gemäß Formel (VI) oder der Imidazole gemäß Formel (VII) umfasst, wobei die Imidazoline und die Imidazole folgende Struktur aufweisen 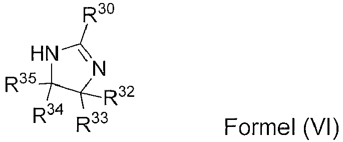 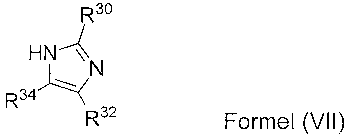 und wobei für die Reste gleichzeitig oder unabhängig voneinander gilt:
- R³⁰ =: gleichzeitig oder unabhängig voneinander Wasserstoff, C1-bis C15-Alkyl, C3- bis C15-Cycloalkyl, Aryl, Arylalkyl;
- R³², R³⁴ =: gleichzeitig oder unabhängig voneinander Wasserstoff, C1- bis C15-Alkyl, C3- bis C15-Cycloalkyl oder gemeinsam unter Bildung eines Ringes C3- bis C15-Alkylen;
- R³³, R³⁵ =: gleichzeitig oder unabhängig voneinander Wasserstoff, C1- bis C15-Alkyl, C3- bis C15-Cycloalkyl oder gemeinsam unter Bildung eines Ringes C3- bis C15-Alkylen.

Diese Imidazoline und Imadazole weisen in Kombination mit flüssigen Grundgemischen aus Cyanamid und mindestens einem Harnstoffderivat der hierin beschriebenen Art eine sehr gute Wirkung als Härtungsbeschleuniger aus, wobei die flüssigen Eigenschaften nicht wesentlich verändert werden und weiterhin flüssige Härter vorliegen. Zudem hat sich besonders überraschend gezeigt, dass die Latenz der flüssigen Härter im Vergleich zu den Grundgemischen oder den flüssigen Härtern ohne Härtungsbeschleuniger verbessert und somt die Lagerfähigkeit erhöht werden kann. Insgesamt kann somit ein Härter zur Verfügung gestellt werden, der aufgrund der hohen Latenz in den Polymerharz-Zusammensetzungen sowie der hohen Reaktivität in den Polymerharz-Zusammensetzungen bei der Härtungstemperatur hervorragend für den Einsatz in Infusions- oder Injektionsverfahren geeignet ist.

Besonders bevorzugt können flüssige Härter in Weiterbildung der Erfindung einen Härtungsbeschleuniger aus der Klasse der Imidazoline gemäß Formel (VI) oder der Imidazole gemäß Formel (VII) umfassen, wobei für die Reste gleichzeitig oder unabhängig voneinander gilt:
- R³⁰ =: Wasserstoff, Methyl, Ethyl, Propyl, Butyl, Pentyl, Hexyl, Heptyl, Oktyl, Nonyl, Decanyl oder Phenyl;
- R³², R³⁴ =: gleichzeitig oder unabhängig voneinander Wasserstoff, C1- bis C5-Alkyl oder Phenyl;
- R³³, R³⁵ =: gleichzeitig oder unabhängig voneinander Wasserstoff, C1- bis C5-Alkyl oder Phenyl.

Ganz besonders bevorzugt können gemäß der vorliegenden Erfindung als Härtungsbeschleuniger Imidazoline gemäß Formel (VI) oder Imidazole gemäß Formel (VII) eingesetzt werden, ausgewählt aus der Gruppe 2-Methyl-1*H*-imidazol, 2-Ethyl-1*H-*imidazol, 2-Propyl-1*H*-imidazol, 2-Butyl-1*H*-imidazol, 2-Pentyl-1*H*-imidazol, 2-Hexyl-1*H-*imidazol, 2-Heptyl-1*H*-imidazol, 2-Octyl-1*H*-imidazol, 2-Nonyl-1*H*-imidazol, 2-Decyl-1*H-*imidazol, 2-Phenyl-1*H*-imidazol, 2-Methyl-1*H*-imidazolin, 2-Ethyl-1*H*-imidazolin, 2-Propyl-1*H*-imidazolin, 2-Butyl-1*H*-imidazolin, 2-Pentyl-1*H*-imidazolin, 2-Hexyl-1*H-*imidazolin, 2-Heptyl-1*H*-imidazolin, 2-Octyl-1*H*-imidazolin, 2-Nonyl-1*H*-imidazolin, 2-Decyl-1*H*-imidazolin und/oder 2-Phenyl-1*H*-imidazolin. Die Imidazole verbessern überraschend im Vergleich zu 1-Alkylimidazolen weiterhin die Latenz und erhöhen somit die Lagerstabilität der flüssigen Härter.

Gemäß einer weiteren vorteilhaften Ausbildung ist damit auch ein flüssiger Härter zur Härtung von härtbaren Polymerharzen Gegenstand der vorliegenden Erfindung, der a) Cyanamid, b) mindestens ein Harnstoffderivat der Formel (I), (II) und/oder (IV), c) einen Viskositätsmodifikator, insbesondere ein Viskositätsmodifikator gemäß Formel (V) und d) mindestens ein Härtungsbeschleuniger aus der Klasse der Imidazoline gemäß Formel (VI) oder der Imidazole gemäß Formel (VII) umfasst, insbesondere enthält, wobei der flüssige Härter bevorzugt Cyanamid und mindestens ein Harnstoffderivat der Formel (I), (II) oder (IV) in einem molaren Verhältnis Cyanamid : Harnstoffderivat oder Harnstoffderivat-Mischung von 1 : 1 bis 4 : 1 umfasst.

In Gegenwart mindestens eines Härtungsbeschleunigers aus der Klasse der Imidazoline gemäß Formel (VI) oder der Imidazole gemäß Formel (VII) können die molaren Verhältnisse von Cyanamid Harnstoffderivat auch außerhalb des bevorzugten Bereichs von 1 1 bis 4 : 1 liegen. Beispielsweise sind molare Verhältnisse von Cyanamid : Harnstoffderivat von 0,1 bis < 1 : 1, insbesondere von 0,2 bis < 1 : 1, möglich, aber auch molare Verhältnisse von Cyanamid : Harnstoffderivat von > 4 : 1 bis 20 :1, insbesondere > 4 : 1 bis 10 : 1.

Weiterhin überraschend konnte festgestellt werden, dass eine besonders hohe Latenz und damit hohe Lagerstabilität der Härter selbst als auch von Epoxidharz-Zusammensetzungen, die diese Härter umfassen, eingestellt werden kann, wenn den Härtern weiterhin ein Stabilisator aus der Gruppe der anorganischen oder organischen Säuren hinzugefügt wird. Durch das Hinzufügen von Stabilisatoren aus der Gruppe der anorganischen oder organischen Säuren konnte die Latenz verdoppelt, in einigen Fällen sogar verdreifacht werden. Hierbei werden gleichzeitig die hervorragenden Härtungseigenschaften, wie beispielsweise die hohe Reaktivität bei der Härtungstemperatur, im Vergleich zu den Härtern ohne Stabilisatoren beibehalten.

Somit umfasst die voliegende Erfindung gemäß einer weiteren Ausführung auch einen flüssigen Härter, der bevorzugt weiterhin e) einen Stabilisator ausgewählt aus der Gruppe anorganischen oder organischen Säuren umfasst.

Als Stabilisatoren haben sich hierbei insbesondere organische Säuren aus der Gruppe der aromatischen und nichtaromatischen Carbonsäuren, Dicarbonsäuren oder Tricarbonsäuren besonders geeignet gezeigt. Weiterhin bevorzugt können als organische Säuren oder als aromatische und nichtaromatische Carbonsäuren, Dicarbonsäuren oder Tricarbonsäuren insbesondere Säuren aus der Gruppe Ameisensäure, Essigsäure, Propansäure, Maleinsäure, Malonsäure, Salicylsäure, Milchsäure, Zitronensäure, Oxalsäure, Adipinsäure, Benzoesäure, Phthalsäure, Alkyl-Sulfonsäuren, Arylsulfonsäuren, insbesondere Toluolsulfonsäure, oder deren Anhydride eingesetzt werden.

Es kann jedoch auch vorgesehen sein, dass erfindungsgemäße Härter als Stabilisator anorganische Säuren ausgewählt aus der Gruppe Salzsäure, Schwefelsäure, schweflige Säure, Phosphorsäure, phosphorige Säure, ortho-Phosphorsäure, Diphosphorsäure, Triphosphorsäure, Polyphosphorsäure, Salpetersäure oder deren Anhydride umfassen.
Somit ist auch ein flüssiger Härter Gegenstand der vorliegenden Erfindung der als Stabilisator eine anorganische oder organische Säure aus der Gruppe Salicylsäure, Phthalsäure, Toluolsulfonsäure, Schwefelsäure, Phosphorsäure oder deren Anhydride oder Mischungen hiervon umfasst.

Gemäß einer weiteren vorteilhaften Ausbildung ist damit auch ein flüssiger Härter zur Härtung von härtbaren Polymerharzen Gegenstand der vorliegenden Erfindung, der a) Cyanamid, b) mindestens ein Harnstoffderivat der Formel (I), (II) und/oder (IV), c) mindestens einen Viskositätsmodifikator, insbesondere ein Viskositätsmodifikator gemäß Formel (V), d) gegebenenfalls mindestens ein Härtungsbeschleuniger aus der Klasse der Imidazoline gemäß Formel (VI) oder der Imidazole gemäß Formel (VII), und e) mindestens einen Stabilisator ausgewählt aus der Gruppe der organischen Säuren, insbesondere aromatische und nichtaromatische Carbonsäuren, Dicarbonsäuren oder Tricarbonsäuren, oder der anorganischen Säuren, insbesondere anorganischen Säuren ausgewählt aus der Gruppe Salzsäure, Schwefelsäure, schweflige Säure, Phosphorsäure, phosphorige Säure, ortho-Phosphorsäure, Diphosphorsäure, Triphosphorsäure, Polyphosphorsäure, Salpetersäure oder deren Anhydride umfasst, insbesondere enthält, wobei der flüssige Härter insbesondere Cyanamid und mindestens ein Harnstoffderivat der Formel (I) in einem molaren Verhältnis Cyanamid : Harnstoffderivat oder Harnstoffderivat-Mischung von 1 : 1 bis 4 : 1 umfasst.

In Gegenwart mindestens eines Stabilisators können die molaren Verhältnisse von Cyanamid : Harnstoffderivat auch außerhalb des bevorzugten Bereichs von 1 : 1 bis 4 : 1 liegen. Beispielsweise sind molare Verhältnisse von Cyanamid : Harnstoffderivat von 0,1 bis < 1 : 1, insbesondere von 0,2 bis < 1 : 1, möglich, aber auch molare Verhältnisse von Cyanamid : Harnstoffderivat von > 4 : 1 bis 20 :1, insbesondere > 4 : 1 bis 10 : 1.

Besonders bevorzugt sind solche Säuren, insbesondere anorganische Säuren, die einen Wassergehalt von weniger als 20 Gew.-% (bezogen auf die Säure) aufweisen. Ganz besonders bevorzugt sind solche Säuren, insbesondere anorganische Säuren, die einen Wassergehalt von weniger als 15 Gew.-%, weiterhin bevorzugt weniger als 10 Gew.-% und ganz besonders weniger als 5 Gew.-% (jeweils bezogen auf die Säure) aufweisen. Somit können flüssige Härter bereit gestellt werden, die ihrerseits flüssig und im Sinn der vorliegenden Erfindung lösemittelfrei sind.

Gemäß einer beonders bevorzugten Ausführung der vorliegenden Erfindung enthält ein flüssiger Härter

| | | |
|---|---|---|
| a) | 1 bis 50 Gewichtsteile | Cyanamid, |
| b) | 1 bis 50 Gewichtsteile | mindestens ein Harnstoffderivat der Formel (I), (II) und/oder (IV), |
| c) | 0,01 bis 50 Gewichtsteile | mindestens ein Viskositätsmodifikator, |
| d) | 0 bis 10 Gewichtsteile | mindestens ein Härtungsbeschleuniger aus der Klasse der Imidazoline der Formel (VI) und/oder der Imidazole der Formel (VII) und |
| e) | 0 bis 10 Gewichtsteile | mindestens ein Stabilisator. |

In Weiterbildung der vorliegenden Erfindung sind ebenso Epoxidharz-Zusammensetzungen umfassend a) mindestens ein härtbares Epoxidharz und b) mindestens einen flüssigen Härter gemäß der oben beschriebenen Art, sowie Polyurethanharz-Zusammensetzungen umfassend a) mindestens ein härtbares Polyurethanharz und b) mindestens einen flüssigen Härter gemäß der oben beschriebenen Art, Gegenstand der vorliegenden Erfindung.

Im Hinblick auf die zu härtenden Epoxidharze unterliegt die vorliegende Erfindung keinerlei Beschränkung. Es kommen sämtliche handelsüblichen Produkte in Frage, die üblicherweise mehr als eine 1,2-Epoxidgruppe (Oxiran) aufweisen und dabei gesättigt oder ungesättigt, aliphatisch, cycloaliphatisch, aromatisch oder heterozyklisch sein können. Außerdem können die Epoxidharze Substituenten wie Halogene, Phosphor- und Hydroxyl-Gruppen aufweisen. Epoxidharze auf Basis Glycidylpolyether von 2,2-Bis(4-hydroxyphenyl)-propan (Bisphenol A) sowie das mit Brom substituierte Derivat (Tetrabrombisphenol A), Glycidylpolyether von 2,2-Bis(4-hydroxyphenyl)methan (Bisphenol F) und Glycidylpolyether von Novolacken sowie auf Basis von Anilin oder substituierten Anilinen wie beispielsweise p-Aminophenol oder 4,4'-Diaminodiphenylmethane können durch Verwendung der erfindungsgemäßen Härter besonders gut gehärtet werden.

Die Einsatzmenge der erfindungsgemäßen flüssigen Härter unterliegt keinen Beschränkungen. Bevorzugt werden jedoch auf 100 Teile Harz, insbesondere härtbares Epoxidharz oder härtbares Polyurethanharz, 0,01 bis 15 Teile eingesetzt, vorzugsweise 0,1 bis 15 Teile, vorzugsweise 0,1 bis 10 Teile und ganz besonders bevorzugt 1 bis 10 Teile (jeweils bezogen auf das Gewicht). Auch eine Kombination mehrerer erfindungsgemäßer, flüssigen Härter oder eine Kombination von erfindungsgemäßen flüssigen Härtern mit weiteren Co-Härtern wird durch diese Erfindung mit abgedeckt.

Die Härtung der Epoxidharze mit Hilfe der erfindungsgemäß eingesetzten Härter erfolgt in der Regel bei Temperaturen ab 80°C. Die Wahl der Härtungstemperatur ist abhängig von der spezifischen Verarbeitungs- und Produktanforderung und kann über die Formulierung vor allem durch Regulierung der Härtermengen sowie durch Zugabe von weiteren Additiven variiert werden. Hierbei ist es unerheblich, auf welche Art den Harzformulierungen Energie zugeführt wird. Beispielhaft kann dies in Form von Wärme durch einen Ofen oder Heizelemente, aber ebenso mittels Infrarotstrahlern oder Anregung durch Mikrowellen oder sonstiger Strahlen geschehen.

Durch den Zusatz weiterer handelsüblicher Additive, wie sie dem Fachmann zur Härtung von Epoxidharzen bekannt sind, kann das Härtungsprofil der erfindungsgemäßen Formulierungen variiert werden.

Additive zur Verbesserung der Verarbeitbarkeit der unausgehärteten Epoxidharz-Zusammensetzungen bzw. der unausgehärteten Polyurethan-Zusammensetzungen oder Additive zur Anpassung der thermisch-mechanischen Eigenschaften der hieraus hergestellten duroplastischen Produkte an das Anforderungsprofil umfassen beispielsweise Reaktivverdünner, Füllstoffe, Rheologieadditive wie Thixotropierungsmittel oder Dispergieradditive, Defoamer, Farbstoffe, Pigmente, Zähmodifikatoren, Schlagzähverbesserer oder Brandschutzadditive.

Epoxidharz-Formulierungen mit den erfindungsgemäßen Härter eignen sich sowohl für manuelle als auch maschinelle Verarbeitungsverfahren und im Besonderen zur Herstellung von imprägnierten Verstärkungsfasern und Composits, wie sie u.a. in den Schriften von G. W. Ehrenstein, Faserverbund-Kunststoffe, 2006, 2. Auflage, Carl Hanser Verlag, München, Kapitel 5, Seite 148ff, und M. Reyne, Composite Solutions, 2006, JEC Publications, Kapitel 5, Seite 51ff, beschrieben sind. Neben dem Einsatz in Prepreg-Verfahren ist insbesondere die Handhabung in Infusions- und Injektionsverfahren eine bevorzugte Verarbeitungsform. Hierbei sind die im Allgemeinen sehr guten Mischbarkeiten der erfindungsgemäßen flüssigen Härter in den Epoxidharzen von Vorteil, da für den Imprägnierprozess fließfähige Infusionsharze mit niedriger Viskosität benötigt werden (vgl. u.a. M. Reyne, Composite Solutions, 2006, JEC Publications, Kapitel 5, Seite 65; und G. W. Ehrenstein, Faserverbund-Kunststoffe, 2006, 2. Auflage, Carl Hanser Verlag, München, Kapitel 5, Seite 166).

Damit ist auch ein Composit-Material umfassend a) ein Trägermaterial, insbesondere ein Fasermaterial, b) mindestens ein härtbares Epoxidharz und/ oder härtbares Polyurethanharz und c) mindestens einen flüssigen Härter der oben beschriebenen Art Gegenstand der Erfindung.

Somit sind ebenfalls die Verwendung von flüssigen Härtern der oben beschriebenen Art zur Härtung von härtbaren Zusammensetzungen Gegenstand der vorliegenden Erfindung. Insbesondere ist dies Verwendung auf Zusammensetzungen gerichtet, die mindestens ein härtbares Epoxidharz und/ oder ein härtbares Polyurethanharz umfassen.

Des Weiteren ist von der vorliegenden Erfindung auch die Verwendung von flüssigen Härtern der oben beschriebenen Art zur Härtung von imprägnierten Fasermaterialien oder imprägnierten Geweben, Gewirken oder Geflechten umfasst.

Aufgrund der günstigen Anwendungseigenschaften der erfindungsgemäßen flüssigen Härter und ihrer niedrigen Dosierung wird ein vorteilhaftes Kosten-Nutzen-Verhältnis erreicht, womit diese Härter besonders gut für eine technische Anwendung geeignet sind.

### Beispiele

### 1) Eingesetzte Rohstoffe:

| | |
|---|---|
| Cyanamid | : AlzChem AG |
| Harnstoff B1 | : 1,1-Dimethylharnstoff- (AlzChem AG) |
| Harnstoff B2 | : 1,1'-(4-Methyl-m-phenylen)-bis-(3,3-dimethylharnstoff) - (AlzChem AG) |
| Harnstoff B4 | : N'-[3-[[[(dimethylamino)carbonyl]amino]methyl]-3,5,5-trimethylcyclohexyl]-N,N-dimethyl-Harnstofff - (AlzChem AG) |
| E 828 LVEL | : Epoxidharz Epikote 828 LVEL - (Fa. Momentive) |
| RIMR 135 | : Epoxidharz - (Fa. Momentive Specialty Chemicals) |
| RIMH 137 | : flüssiger Aminhärter - (Fa. Momentive Specialty Chemicals) |
| Vestamin IPDA | : flüssiger Aminhärter - (Fa. Evonik Degussa GmbH) |
| Modifikator M1 | : 1-Hexanol (Sdp 157 °C) - (Fa. Merck) |
| Modifikator M2 | : Ethylenglycol (Sdp 197 °C) - (Fa. Merck) |
| Modifikator M3 | : Hexantriol (Sdp 178 °C) - (Fa. Evonik Degussa GmbH) |
| Modifikator M4 | : 3-Pentanon (Sdp 102 °C) - (Fa. Baker) |
| Modifikator M5 | : Octanal (Sdp 171 °C) - (Fa. Merck) |
| Modifikator M6 | : Benzonitril (Sdp 191 °C) - (AlzChem AG, Trostberg) |
| Modifikator M7 | : Acetessigsäureethylester (Sdp 180 °C) - (Fa. Fluka) |
| Modifikator M8 | : Methylglycol (Sdp 124 °C) - (Fa. Roth) |
| Modifikator M9 | : 2-Aminoethanol (Sdp 172 °C) - (Fa. Roth) |
| Modifikator M10 | : Essigsäureanhydrid (Sdp 139 °C) - (Fa. Merck) |
| Beschleuniger I1 | : 2-Methyl-1H-imidazol - (AlzChem AG) |
| Beschleuniger I2 | : 1-Methylimidazol - (Fa. Roth) |
| Beschleuniger I3 | : 2-Phenyl-1H-imidazol - (AlzChem AG) |
| Beschleuniger I4 | : 2-Phenyl-1H-imidazolin - (AlzChem AG) |
| Beschleuniger I5 | : 4,5-Dihydro-2-nonyl-1H-Imidazol - (AlzChem AG) |
| Beschleuniger I6 | : 2-Nonyl-1H-Imidazol - (AlzChem AG) |

**Tabelle 1: Zusammensetzungen der flüssigen Härter mit Härtungsbeschleuniger**

| **Ausgangsgemisch für flüssige Härter** | | | | | **Molverhältnisse Ausgangsgemisch : Härtungsbeschleuniger [mol : mol]** | | | | | | | **Flüssige Härter** |
|---|---|---|---|---|---|---|---|---|---|---|---|---|
| **Nr.** | **Cyanamid** | **B1** | **B2** | **B4** | **Ausgangsgemisch** | **I1** | **I2** | **I3** | **I4** | **I5** | **I6** | **Nr.** |
| H5 | X | X | X | - | 1 | 0 | 0 | 0 | 0 | 0 | 0 | H5 * |
| H6 | X | - | - | X | 1 | 0 | 0 | 0 | 0 | 0 | 0 | H6 * |
| H6 | X | - | - | X | 1 | 0,021 | 0 | 0 | 0 | 0 | 0 | H6I1 |
| H6 | X | - | - | X | 1 | 0 | 0,010 | 0 | 0 | 0 | 0 | H6I2 |
| H6 | X | - | - | X | 1 | 0 | 0 | 0,008 | 0 | 0 | 0 | H6I3 |
| H6 | X | - | - | X | 1 | 0 | 0 | 0 | 0,008 | 0 | 0 | H6I4 |
| H6 | X | - | - | X | 1 | 0 | 0 | 0 | 0 | 0,009 | 0 | H6I5 |
| H6 | X | - | - | X | 1 | 0 | 0 | 0 | 0 | 0 | 0,009 | H6I6 |
| H7 | X | X | X | X | 1 | 0 | 0 | 0 | 0 | 0 | 0 | H7 * |
| H7 | X | X | X | X | 1 | 0,016 | 0 | 0 | 0 | 0 | 0 | H7I1 |

| | | | | | | | | | | | | |
|---|---|---|---|---|---|---|---|---|---|---|---|---|
| * : nicht erfindungsgemäß | | | | | | | | | | | | |

**Tabelle 2: Zusammensetzung der flüssigen Härter mit Viskositätsmodifikatoren**

| **Ausgangsgemisch gemäß Tabelle 1** | **Molverhältnisse Ausgangsgemisch : Härtungsbeschleuniger / [mol : mol]** | | | | | | | | | | | **flüssige Härter** |
|---|---|---|---|---|---|---|---|---|---|---|---|---|
| **Nr.** | **Ausgangsgemisch** | **M1** | **M2** | **M3** | **M4** | **M5** | **M6** | **M7** | **M8** | **M9** | **M10** | **Nr.** |
| H5 | 1 | 0,304 | 0 | 0 | 0 | 0 | 0 | 0 | 0 | 0 | 0 | H5M1 |
| H5 | 1 | 0 | 0,502 | 0 | 0 | 0 | 0 | 0 | 0 | 0 | 0 | H5M2 |
| H5 | 1 | 0 | 0 | 0,232 | 0 | 0 | 0 | 0 | 0 | 0 | 0 | H5M3 |
| H5 | 1 | 0 | 0 | 0 | 0,362 | 0 | 0 | 0 | 0 | 0 | 0 | H5M4 |
| H5 | 1 | 0 | 0 | 0 | 0 | 0,248 | 0 | 0 | 0 | 0 | 0 | H5M5 |
| H5 | 1 | 0 | 0 | 0 | 0 | 0 | 0,302 | 0 | 0 | 0 | 0 | H5M6 |
| H5 | 1 | 0 | 0 | 0 | 0 | 0 | 0 | 0,239 | 0 | 0 | 0 | H5M7 |
| H5 | 1 | 0 | 0 | 0 | 0 | 0 | 0 | 0 | 0,409 | 0 | 0 | H5M8 |
| H5 | 1 | 0 | 0 | 0 | 0 | 0 | 0 | 0 | 0 | 0,510 | 0 | H5M9 |
| H5 | 1 | 0 | 0 | 0 | 0 | 0 | 0 | 0 | 0 | 0 | 0,305 | H5M10 |
| H6 | 1 | 0,362 | 0 | 0 | 0 | 0 | 0 | 0 | 0 | 0 | 0 | H6M1 |
| H6 | 1 | 0 | 0,597 | 0 | 0 | 0 | 0 | 0 | 0 | 0 | 0 | H6M2 |
| H6 | 1 | 0 | 0 | 0,276 | 0 | 0 | 0 | 0 | 0 | 0 | 0 | H6M3 |
| H6 | 1 | 0 | 0 | 0 | 0,430 | 0 | 0 | 0 | 0 | 0 | 0 | H6M4 |
| H6 | 1 | 0 | 0 | 0 | 0 | 0,289 | 0 | 0 | 0 | 0 | 0 | H6M5 |
| H6 | 1 | 0 | 0 | 0 | 0 | 0 | 0,359 | 0 | 0 | 0 | 0 | H6M6 |
| H6 | 1 | 0 | 0 | 0 | 0 | 0 | 0 | 0,284 | 0 | 0 | 0 | H6M7 |
| H6 | 1 | 0 | 0 | 0 | 0 | 0 | 0 | 0 | 0,487 | 0 | 0 | H6M8 |
| H6 | 1 | 0 | 0 | 0 | 0 | 0 | 0 | 0 | 0 | 0,607 | 0 | H6M9 |
| H6 | 1 | 0 | 0 | 0 | 0 | 0 | 0 | 0 | 0 | 0 | 0,363 | H6M10 |

**Tabelle 3: Zusammensetzung erfindungsgemäße flüssige Härter mit Viskositätsmodifikatoren und Härtungsbeschleuniger - Molverhältnisse / [mol : mol]**

| **Ausgangsgemisch gemäß Tabelle 1** | **Ausgangsgemisch** | **M3** | **Flüssige Härter** |
|---|---|---|---|
| H6I1 | 1 | 0,276 | H6I1M3 |
| H6I2 | 1 | 0,276 | H6I2M3 |
| H6I3 | 1 | 0,276 | H6I3M3 |
| H6I4 | 1 | 0,276 | H6I4M3 |
| H6I5 | 1 | 0,276 | H6I5M3 |
| H6I6 | 1 | 0,276 | H6I6M3 |
| H7I1 | 1 | 0,276 | H7I1M3 |

### 2) Herstellung von flüssigen Härter

### a) mit Viskositätsmodifikatoren und Härterbeschleunigern

Apparatur: 500 ml Doppelwand-Reaktionsgefäß, Thermostat, KPG-Rührer, 3-Blatt-Metallrührer, Thermometer, Pulvertrichter,
Durchführung: Über den Pulvertrichter werden zuerst Cyanamid, die verschiedenen Harnstoffe (B1, B2, B4), der Viskositätsmodifikator (M3) sowie die Härterbeschleunigern (I1-I6) in das Reaktionsgefäß gegeben. Dann wird das Doppelwand-Reaktionsgefäß mit 40 bis 42 °C warmem Wasser beschickt und der 3-Blatt-Metallrührer (200 U/Min) eingeschaltet. Je nach Viskositätsmodifikator wird nun, bei einer Innentemperatur von 35 bis 40 °C, in 20 bis 40 Minuten ein flüssiger Härter hergestellt. Anschließend wird der flüssige Härter auf 20 bis 25 °C abgekühlt, in Glasbehälter umgefüllt und bei 23 °C gelagert.

### b) mit Viskositätsmodifikatoren

Apparatur: 500 ml Doppelwand-Reaktionsgefäß, Thermostat, KPG-Rührer, 3-Blatt-Metallrührer, Thermometer, Pulvertrichter,
Durchführung: Über den Pulvertrichter werden zuerst Cyanamid, die verschiedenen Harnstoffe (B1, B2, B4), sowie der Viskositätsmodifikator (M1-M10) in das Reaktionsgefäß gegeben. Dann wird das Doppelwand-Reaktionsgefäß mit 40 bis 42 °C warmem Wasser beschickt und der 3-Blatt-Metallrührer (200 U/Min) eingeschaltet. Je nach Viskositätsmodifikator wird nun, bei einer Innentemperatur von 35 bis 40 °C, in 20 bis 40 Minuten ein flüssiger Härter hergestellt. Anschließend wird der flüssige Härter auf 20 bis 25 °C abgekühlt, in Glasbehälter umgefüllt und bei 23 °C gelagert.

### 3) Use-Tests - Ergebnisse: Eigenschaften erfindungsgemäßer Epoxidharz-Zusammensetzungen

a) Zusammensetzung erfindungsgemäßer Epoxidharz-Zusammensetzungen Für die Use-Tests wurden Epoxidharz-Zusammensetzung mit erfindungsgemäßen flüssigen Härter bei gleichen Mischungsverhältnissen (jeweils 100 Gewichteile Epoxidharz, 10 Gewichtsteile flüssige Härter) verwendet.
b) Herstellung erfindungsgemäßer Epoxidharz-Zusammensetzungen In ein 250 ml Dispergiergefäß werden 100 Gewichtsteile Epoxidharz (Epikote 828 LVEL) und 10 Gewichtsteile der erfindungsgemäßen Härter gemäß Tabellen 1-3 eingewogen und am Dissolver mit 500 U/min 2 Minuten lange gemischt. Anschließend wird die Mischung im Vakuum 10 Minuten entlüftet.
c) Messmethoden zur Bestimmung der Eigenschaften

| | |
|---|---|
| ∘ Dyn-DSC: | Messung auf Mettler Toledo DSC 822 |
| | Standard 30 - 250 °C, mit einer Aufheizrate von 10 K/min |
| | |
| ∘ Glaspunkt: | Messung auf Mettler Toledo DSC 822 |
| | Tg 3 x aufheizen |
| | aufheizen von 30 °C auf 200 °C mit 20 K/min |
| | 10,0 min bei 200 °C gehalten |
| | abkühlen von 200 °C auf 50 °C mit 20 K/min |
| | 5,0 min bei 50 °C gehalten |
| | aufheizen von 50 °C auf 200 °C mit 20 K/min |
| | 10,0 min bei 200 °C gehalten |
| | abkühlen von 200 °C auf 50 °C mit 20 K/min |
| | 5,0 min bei 50 °C gehalten |
| | aufheizen von 50 °C auf 220 °C mit 20 K/min |
| ° Viskosität: | Messung auf HAAKE Rheostress 1 |
| | durchgeführt bei 25 °C in Pa*s, mit Drehkörper Kegel 1° C35/1 Ti Ø 35 mm mit einer Scherrate von 5,0 1/s (reziproke Sekunde) |
| | |
| ° Gelzeit: | Messung auf Metallblock-Thermostat VLM 2.0/-HAT in ALU-Steck-Kappen (Ø 15 mm x 25 mm Höhe) bei 140 °C |
| | |
| ° Latenz: | Lagerfähigkeit der Epoxidharz-Zusammensetzungen in Tagen (d) nach Lagerung bei 23 °C im Klimaschrank. |
| | Definition der Latenz: Ist die Zeit in Tagen (d) nach der sich die Viskosität der Epoxidharz-Zusammensetzung verdoppelt hat. Zu diesem Zeitpunkt ist das Ende der Lagerfähigkeit erreicht. |

**Tabelle 4: Epoxidharz-Zusammensetzungen flüssigen Härtern sowie deren Eigenschaften**

| **Epoxidharz-Zusammensetzung** | **Flüssige Härter** | **Dyn-DSC Onset [°C]** | **Dyn-DSC Peak [°C]** | **integrale Wärme [J/g]** | **Gelzeit bei 140 °C [min:sek]** | **Glaspunkt Tg [°C]** | **Viskosität bei 25 °C [Pa*s]** | **Latenz bei 23 °C [d]** |
|---|---|---|---|---|---|---|---|---|
| E1 * | H5 * | 132 | 144 | 342 | 03:30 | 111 | 5,5 | 6 |
| E2 | H5M1 | 137 | 146 | 271 | 02:20 | 113 | 2,3 | 3 |
| E3 | H5M2 | 133 | 144 | 281 | 02:55 | 111 | 3,3 | 3 |
| E4 | H5M3 | 139 | 148 | 254 | 05:20 | 113 | 6,2 | 21 |
| E5 | H5M4 | 143 | 152 | 219 | 04:20 | 121 | 2,2 | 20 |
| E6 | H5M5 | 129 | 142 | 198 | 01:20 | 110 | 4,7 | 3 |
| E7 | H5M6 | 142 | 152 | 191 | 02:30 | 116 | 2,6 | 3 |
| E8 | H5M7 | - | - | - | - | - | - | - |
| E9 | H5M8 | 143 | 153 | 253 | 08:15 | 121 | 2,1 | 20 |
| E10 | H5M9 | - | - | - | - | - | - | - |
| E11 | H5M10 | - | - | - | - | - | - | - |
| E12 * | H6 * | 134 | 144 | 252 | 12:00 | 113 | 6,1 | 6 |
| E13 | H6M1 | 135 | 145 | 247 | 10:45 | 127 | 3,6 | 6 |
| E14 | H6M2 | 142 | 151 | 195 | 08:30 | 125 | 4,7 | 22 |
| E15 | H6M3 | 139 | 148 | 262 | 06:30 | 121 | 7,4 | 27 |
| E16 | H6M4 | 147 | 152 | 281 | 15:30 | 121 | 3,6 | 19 |
| E17 | H6M5 | 128 | 141 | 175 | 14:30 | 119 | 5,8 | 5 |
| E18 | H6M6 | 147 | 160 | 238 | 15:00 | 121 | 3,2 | 25 |
| E19 | H6M7 | 141 | 151 | 214 | 16:30 | 121 | 2,9 | 4 |
| E20 | H6M8 | 143 | 153 | 253 | 08:15 | 121 | 2,1 | 11 |
| E21 | H6M9 | 111 | 152 | 246 | 03:30 | 123 | 9,3 | < 1h |
| E22 | H6M10 | 95 | 131 | 450 | 40:00 | 126 | 2,7 | 8 |
| E23 | H6I1M3 | 135 | 144 | 315 | 04:00 | 120 | 9,7 | 10 |
| E24 | H6I2M3 | 127 | 142 | 147 | 04:30 | 121 | 8,0 | 2 |
| E25 | H6I3M3 | 143 | 151 | 275 | 05:20 | 121 | 7,5 | 25 |
| E26 | H6I4M3 | 141 | 149 | 275 | 05:00 | 120 | 8,2 | 34 |
| E27 | H6I5M3 | 144 | 150 | 265 | 05:45 | 118 | 8,0 | 34 |
| E28 | H6I6M3 | 142 | 149 | 267 | 06:00 | 119 | 7,3 | 19 |
| E29 * | H7 * | 127 | 133 | 232 | 06:15 | 128 | 5,4 | 1 |
| E30 | H7M3I1 | 131 | 142 | 356 | 03:00 | 115 | 7,4 | 6 |
| E31 ** | VESTAMIN IPDA * | 80 | 116 | 453 | 13:30 bei 80 °C | 99 | 5,3 | < 1 |
| E32 *** | RIMH137 * | 88 | 126 | 436 | 40:00 bei 80 °C | 98 | 4,1 | < 1 |

| | | | | | | | | |
|---|---|---|---|---|---|---|---|---|
| * : nicht erfindungsgemäß ** : nicht erfindungsgemäß, verwendetes Epoxidharz E828 - (Fa. Momentiv Speciality Chemicals), 100 Teile Epoxidharz : 23 Teile Vestamin IPDA - (Fa. Evonik Degussa GmbH) *** : nicht erfindungsgemäß, verwendetes Epoxidharz RIMR 135 - (Fa. Momentiv Speciality Chemicals), 100 Teile Epoxidharz : 30 Teile RIMH 137 - (Fa. Momentiv Speciality Chemicals) | | | | | | | | |

Die in Tabelle 4 aufgeführten Ergebnisse der Reaktionen der verschiedenen viskositätsmodifizierten Flüssighärter mit Epoxydharz zeigen eindeutig, dass die Viskositätsmodifizierer kaum Einfluss auf die Glasübergangstemperatur (Tg) des resultierenden Polymers ausüben. Ihr Einfluss jedoch auf die Viskositäten, wie beabsichtigt, die Latenzen und die Gelzeiten erheblich ist. Hierbei können die verschiedenen Klassen der Viskositätsmodifizierer unterschiedliche Einflüsse auf die erfindungsgemäßen viskositätsmodifizierten Flüssighärter ausüben.

Während bei den Härtern H5 und H6 einwertige Alkohole, zweiwertige Alkohole, Ketone, Nitrile und Ether viskositätsreduzierend wirken, erhöhen dreiwertige Alkohole die Viskosität. Aldehyde wirken viskositätsneutral. Bei den Härter H6 wirken auch noch Ester und Anhydride viskositätsreduzierend, während Aminoalkohole die Viskositäten erhöhen. Die Härter H5 reagieren spontan mit den Viskositätsmodifikatoren aus der Reihe der Ester, Anydride und Aminoalkohole, daher können Viskositäten, Gelzeiten und Latenzen nicht gemessen werden.

Sowohl auf die Lagerstabilitäten (Latenzen) der verschiedenen Epoxydharz/Härter Gemische als auch auf ihre Reaktivität haben die verschieden Viskositätsmodifikatoren jedoch einen außergewöhnlich starken Einfluss. Bei den Härtern H5 reduzieren einwertige Alkohole, zweiwertige Alkohole Aldehyde und Nitrile die Latenzen auf die Hälfte, während dreiwertige Alkohole, Ketone und Ether die Latenzen mehr als verdreifachen. Die Latenzen der Epoxydharz/H6 Gemische verhalten sich uneinheitlich, hier verdreifachen auch zweiwertige Alkohole und Nitrile die Lagerstabilitäten.

Die Gelzeiten geben Aufschluss über die Reaktionsfähigkeit der Epoxydharz/ Härter Gemische. Auffallend ist, dass Viskositätsmodifikatoren die Gelzeiten reduzieren und andere diese erhöhen können. Einwertige und zweiwertige Alkohole beschleunigen in der Regel die Reaktion, während dreiwertige Alkohole, Ketone und Ether diese verlangsamen. Aldehyde und Nitrile beschleunigen Reaktionen der Härter H5, während sie die Reaktionen der Härter H6 verlangsamen. Bei H6 wirken auch Ester und Anhydride verlangsamend, während Aminoalkohole naturgemäß beschleunigen ohne jedoch spontan zu reagieren.

Werden die viskositätsmodifizierten Flüssighärter in ihrer Zusammensetzung mit Imidazolen modifiziert, so lassen sich zwar weitere Erniedrigungen der Gelzeiten und damit eine Erhöhung der Reaktivität beobachten, dies geht aber durchwegs mit erheblichen Erhöhungen der Viskositäten und Lagerstabilitäten (Latenzen) einher.

Im Vergleich dazu zeigen die bekannten und gebräuchlichen flüssigen Aminhärter wie z.B. RIMH 137 (Fa. Momentiv Speciality Chemicals) oder IPDA (Fa. Evonik Degussa GmbH) zwar niedrigere Härtungstemperaturen, die erfindungsgemäßen Gemische beginnen die Polymerisation aber zu vergleichbaren Zeiten und erzielen weit höhere Glasübergangstemperaturen, besitzen aber eine weitaus größere Latenz.

Durch den Einsatz von Viskositätsmodifikatoren und Imidazolen in den erfindungsgemäßen viskositätsmodifizierten Flüssighärtern wird ein Bündel von besonderen Eigenschaftsprofilen dieser Flüssighärter erzeugt, wie sie in vielen Anwendungen im Compositbereich gefordert wird. Durch diese große Bandbreite der Eigenschaften, können die erfindungsgemäßen viskositätsmodifizierten Flüssighärter auf nahezu alle Anforderungen individuell angepasst werden.

**Tabelle 5: Infusions-Versuch mit Epoxidharz-Zusammensetzungen gemäß Tabelle 4**

| **Epoxidharz-Zusammensetzung** | **Injektionszeit in Minuten** | **Härtungszeit in h Temperatur in °C** | | **Kalt-Tg** | **End-Tg** | **Bemerkungen** |
|---|---|---|---|---|---|---|
| E2 | 4 | 4 h | 78°- 80 °C | 116 | 118 | Faserverbund lässt sich gut entkernen Faserverbund sieht gut aus, ist gleichmäßig, hat keine Fehlstellen |
| E20 | 4 | 6 h | 88°- 90 °C | 120 | 126 | Faserverbund lässt sich gut entkernen Faserverbund sieht gut aus, ist gleichmäßig, hat keine Fehlstellen |
| E30 | 4 | 2h | 78°- 80°C | 118 | 121 | Faserverbund lässt sich gut entkernen Faserverbund sieht gut aus, ist gleichmäßig, hat keine Fehlstellen |

**Tabelle 6: Faserverbund - Aufbau für Infusionsversuche**

| Bauteil | Material |
|---|---|
| Grundschicht | R&G Vakuumfolie Nr. 390160 |
| Abdichtung | Tacky Tape SM5126-1/2" x X1/8 " |
| Trennfilm (unten) | Nylon Peel ply (Leinwandbindung 64 g/m³) versetzt |
| Laminat (Glasfaser) | 5 Lagen Atlas FK 144 (296 g/m³) |
| Trennfilm (oben) | Nylon Peel ply (Leinwandbindung 64 g/m³) versetzt |
| Trennfolie | R&G Trennfolie Nr. 390190 |
| Belüftungsfilm | R&G Vlies Nr. 390180 |
| Vacuum mesh | Entlüftungsnetz 150 g/m³ (Laufrichtung - schwarz) |
| Vakuumfolie | R&G Vakuumfolie Nr. 390160 |
| Schläuche (Zu- u. Ableitung) | Teflon, (4,0 mm innen Ø, 5,0 mm außen Ø) PVC, klar (6,0 mm innen Ø, 7,0 mm außen Ø) |
| Träger | Glasplatte |

| | |
|---|---|
| Form: Heizplatte Vorratsgefäß: Becherglas Vakuum: Vakuumpumpe Standard (15-20 mbar) | |

### Versuchsdurchführung:

Epoxidharz-Zusammensetzungen E2, E20, werden in einem beheizbaren Vorratsgefäß gemischt und vorgewärmt. Der Zuleitungsschlauch wird in das Vorratsgefäß eingeführt und fixiert, der Ableitungsschlauch (siehe Aufbau eines Infusionsversuchs, Tabelle 5) wird über ein Sicherheitsventil mit der Vakuumpumpe verbunden, die Pumpe wird eingeschaltet. Die Heizplatte (sie simuliert die beheizbare Form) wird auf die Infusionstemperatur gebracht. Mit dem Anlegen des Vakuums wird die Epoxidharz-Zusammensetzung durch den Faserverbund gesaugt. Nach vollständiger Tränkung werden Zu- und Ablaufschlauch abgeklemmt und gekappt, der gesamte Aufbau härtet nun auf der Heizplatte zu einem Laminat aus. Nach vollständiger Härtung und Abkühlung wird das Laminat aus dem Aufbau entfernt.

## Patentansprüche

1. Flüssiger Härter zur Härtung von Epoxidharzen, umfassend
a) Cyanamid;
b) mindestens ein Harnstoffderivat der Formel (II) und/oder der Formel (IV) 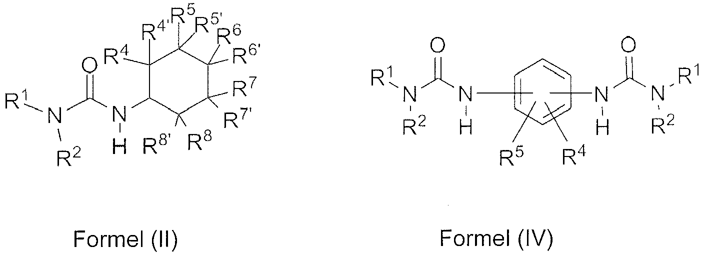 wobei für die Reste gleichzeitig oder unabhängig voneinander gilt:
R¹, R² = gleichzeitig oder unabhängig voneinander Wasserstoff, C1- bis C15-Alkyl, C3- bis C15-Cycloalkyl oder gemeinsam unter Bildung eines Ringes C3- bis C10-Alkylen;
R⁴, R^{4'}, R⁵, R^{5'}, R⁶, R^{6'}, R⁷, R^{7'}, R⁸, R^{8'} = gleichzeitig oder unabhängig voneinander Wasserstoff, C1- bis C15-Alkyl, C3- bis C15-Cycloalkyl, -NHC(O)NR¹R² oder mit -NHC(O)NR¹R² substituiertes C1- bis C15-Alkyl;
und
c) mindestens einen Viskositätsmodifikator ausgewählt aus der Gruppe der Mono-, Di- und/oder Polyole, Ether, Polyether, Polyetherpolyole, Ketone, Aldehyde, Nitrile, Carbonsäureester oder Mischungen hiervon.

2. Flüssiger Härter nach Anspruch 1,
**dadurch gekennzeichnet, dass** für die Reste in Formel (II) und/oder in Formel (IV) gleichzeitig oder unabhängig voneinander gilt:
R¹, R² = gleichzeitig oder unabhängig voneinander Wasserstoff, oder C1- bis C15-Alkyl;
R⁴, R^{4'}, R⁵, R^{5'}, R⁶, R^{6'}, R⁷, R^{7'}, R⁸, R^{8'} = gleichzeitig oder unabhängig voneinander Wasserstoff, C1- bis C15-Alkyl, -NHC(O)NR¹R² oder mit -NHC(O)NR¹R² substituiertes C1- bis C15-Alkyl.

3. Flüssiger Härter nach Anspruch 1 oder 2, **dadurch gekennzeichnet, dass** für die Reste in Formel (II) gilt:
R¹, R² = gleichzeitig oder unabhängig voneinander Wasserstoff oder Methyl;
R⁴, R^{4'}, R⁵, R^{5'}, R⁶, R^{6'}, R⁷, R^{7'}, R⁸, R^{8'} = gleichzeitig oder unabhängig voneinander Wasserstoff, Methyl Ethyl, -NHC(O)NR¹R² oder mit -NHC(O)NR¹R² substituiertes Methyl oder Ethyl.

4. Flüssiger Härter nach Anspruch 1 oder 2, **dadurch gekennzeichnet, dass** für die Reste in Formel (IV) gilt:
R¹, R² = Methyl;
R⁴, R⁵ = gleichzeitig oder unabhängig voneinander Wasserstoff oder C1- bis C15-Alkyl.

5. Flüssiger Härter nach mindestens einem der vorgenannten Ansprüche, **dadurch gekennzeichnet, dass** der Härter einen Schmelzpunkt Sₘ mit Sₘ < 20 °C (Normaldruck) aufweist oder bei einer Temperatur von 20 °C (Normaldruck) flüssig vorliegt und eine Viskosität von weniger als 1 Pa*s aufweist.

6. Flüssiger Härter nach mindestens einem der vorgenannten Ansprüche, **dadurch gekennzeichnet, dass** der Härter einen Viskositätsmodifikator umfasst, der seinerseits einen Siedepunkt von mindestens 100 °C aufweist.

7. Flüssiger Härter nach mindestens einem der vorgenannten Ansprüche, **dadurch gekennzeichnet, dass** der Härter mindestens einen Viskositätsmodifikator ausgewählt aus der Gruppe der Mono-, Di- und/oder Polyole, Ether, Etheralkohole, Polyether oder Polyetherpolyole oder Mischungen hiervon gemäß allgemeiner Formel (V) umfasst, 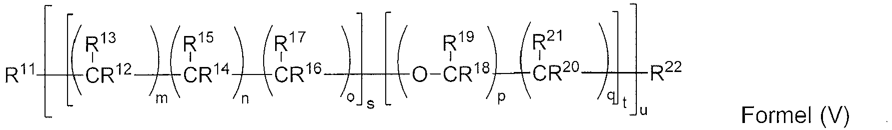 wobei für die Reste gleichzeitig oder unabhängig voneinander gilt:
R¹¹, R²² = gleichzeitig oder unabhängig voneinander Wasserstoff, -OH oder C1- bis C10-Alkyl;
R¹², R¹⁴, R¹⁶, R¹⁸, R²⁰ = gleichzeitig oder unabhängig voneinander Wasserstoff, -OH oder C1- bis C5-Alkyl;
R¹³, R¹⁵, R¹⁷, R¹⁹, R²¹ = gleichzeitig oder unabhängig voneinander Wasserstoff, -OH, -NH₂ oder C1- bis C5-Alkyl;
mit
m, n, o, s, p, q, t = gleichzeitig oder unabhängig voneinander eine Zahl von 0 bis 10, und wobei
i) m, s, u = gleichzeitig oder unabhängig voneinander eine Zahl von 1 bis 10, und/oder
ii) p, t, u = gleichzeitig oder unabhängig voneinander eine Zahl von 1 bis 10.

8. Flüssiger Härter nach mindestens einem der vorgenannten Ansprüche, **dadurch gekennzeichnet, dass** der Härter weiterhin d) mindestens einen Härtungsbeschleuniger aus der Klasse der Imidazoline gemäß Formel (VI) oder der Imidazole gemäß Formel (VII) umfasst 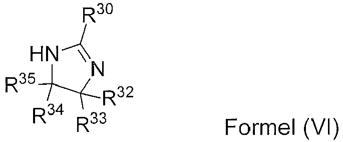 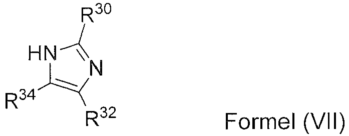 wobei für die Reste gleichzeitig oder unabhängig voneinander gilt:
R³⁰ = gleichzeitig oder unabhängig voneinander Wasserstoff, C1- bis C20-Alkyl, C3- bis C20-Cycloalkyl, Aryl, Arylalkyl;
R³², R³⁴ = gleichzeitig oder unabhängig voneinander Wasserstoff, C1- bis C15-Alkyl, C3- bis C15-Cycloalkyl oder gemeinsam unter Bildung eines Ringes C3- bis C15-Alkylen;
R³³, R³⁵ = gleichzeitig oder unabhängig voneinander Wasserstoff, C1- bis C15-Alkyl, C3- bis C15-Cycloalkyl oder gemeinsam unter Bildung eines Ringes C3- bis C15-Alkylen.

9. Flüssiger Härter nach mindestens einem der vorgenannten Ansprüche, **dadurch gekennzeichnet, dass** der Härter weiterhin e) einen Stabilisator ausgewählt aus der Gruppe anorganischen oder organischen Säuren umfasst.

10. Flüssiger Härter nach mindestens einem der vorgenannten Ansprüche, **dadurch gekennzeichnet, dass** als Stabilisator eine anorganische oder organische Säure aus der Gruppe Salicylsäure, Phthalsäure, Toluolsulfonsäure, Schwefelsäure, Phosphorsäure oder deren Anhydride oder Mischungen hiervon umfasst.

11. Flüssiger Härter nach mindestens einem der vorgenannten Ansprüche, **dadurch gekennzeichnet, dass** der Härter enthält:
| | |
|---|---|
| 1 bis 50 Gewichtsteile | Cyanamid, |
| 1 bis 50 Gewichtsteile | mindestens ein Harnstoffderivat der Formel (II) und/oder Formel (IV), |
| 0,01 bis 50 Gewichtsteile | mindestens ein Viskositätsmodifikator |
| 0 bis 10 Gewichtsteile | mindestens ein Härtungsbeschleuniger aus der Klasse der Imidazoline der Formel (VI) und/oder der Imidazole der Formel (VII) und |
| 0 bis 10 Gewichtsteile | mindestens ein Stabilisator. |

12. Epoxidharz-Zusammensetzung umfassend
a) mindestens ein härtbares Epoxidharz und
b) mindestens einen flüssigen Härter gemäß mindestens einem der vorgenannten Ansprüche 1 bis 11.

13. Composit-Material umfassend
a) ein Fasermaterial,
b) mindestens ein härtbares Epoxidharz
c) mindestens einen flüssigen Härter gemäß mindestens einem der vorgenannten Ansprüche 1 bis 11.

14. Verwendung von flüssigen Härtern gemäß mindestens einem der vorgenannten Ansprüche 1 bis 11 zur Härtung von imprägnierten Fasermaterialien oder imprägnierten Geweben, Gewirken oder Geflechten.

## Claims

1. Liquid curing agent for curing epoxy resins, comprising
a) cyanamide;
b) at least one urea derivative of the formula (II) and/or formula (IV) 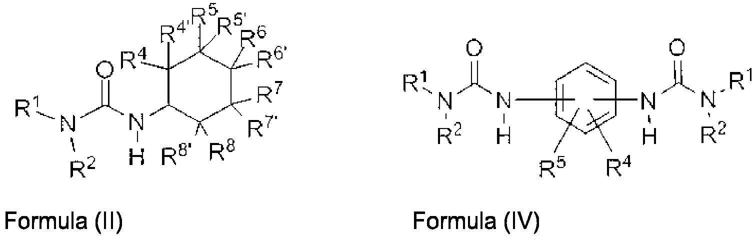 in which the following applies to the radicals simultaneously or independently of one another:
R¹, R² are, simultaneously or independently of one another, hydrogen, C₁-C₁₅-walkyl, C₃-C₁₅-cycloalkyl or together C₃-C₁₀-alkylene, by forming a ring;
R⁴, R⁴', R⁵, R^{5'}, R⁶, R^{6'}, R⁷, R^{7'}, R⁸, R^{8'} are, simultaneously or independently of one another, hydrogen, C₁-C₁₅-alkyl, C₃-C₁₅-cycloalkyl,-NHC(O)NR¹R² or C₁-C₁₅-alkyl substituted with-NHC(O)NR¹R²;
and
c) at least one viscosity modifier selected from the group of mono-, di- and/or polyols, ethers, polyether, polyether polyols, ketones, aldehydes, nitriles, carboxylic acid esters or mixtures thereof.

2. Liquid curing agent according to claim 1,
**characterized in that** for the radicals in formula (II) and/or in formula (IV), simultaneously or independently of one another, the following applies:
R¹, R² are, simultaneously or independently of one another, hydrogen or C₁-C₁₅-alkyl;
R⁴, R⁴', R⁵, R^{5'}, R⁶, R^{6'}, R⁷, R^{7'}, R⁸, R^{8'} are, simultaneously or independently of one another, hydrogen, C₁-C₁₅-alkyl, -NHC(O)NR¹R² or C₁-C₁₅-alkyl, substituted with -NHC(O)NR¹R².

3. Liquid curing agent according to claim 1 or 2, **characterized in that** for the radicals in formula (II) the following applies:
R¹, R² are, simultaneously or independently of one another, hydrogen or methyl;
R⁴, R^{4'}, R⁵, R^{5'}, R⁶, R^{6'}, R⁷, R^{7'}, R⁸, R^{8'} are, simultaneously or independently of one another, hydrogen, methyl, ethyl, -NHC(O)NR¹R² or methyl or ethyl substituted by -NHC(O)NR¹R².

4. Liquid curing agent according to claim 1 or 2, **characterized in that** for the radicals in formula (IV) the following applies:
R¹, R² are methyl;
R⁴, R⁵ are, simultaneously or independently of one another, hydrogen or C₁-C₁₅-alkyl.

5. Liquid curing agent according to at least one of the preceding claims, **characterized in that** the curing agent has a melting point of Sₘ, wherein Sₘ is <20 °C (normal pressure), or is present in liquid form at a temperature of 20 °C (normal pressure) and has a viscosity of less than 1 Pa*s.

6. Liquid curing agent according to at least one of the preceding claims, **characterized in that** the curing agent comprises a viscosity modifier, which in turn has a boiling point of at least 100 °C.

7. Liquid curing agent according to at least one of the preceding claims, **characterized in that** the curing agent comprises at least one viscosity modifier selected from the group of mono-, di- and/or polyols, ethers, ether alcohols, polyethers or polyether polyols or mixtures thereof according to the general formula (V), 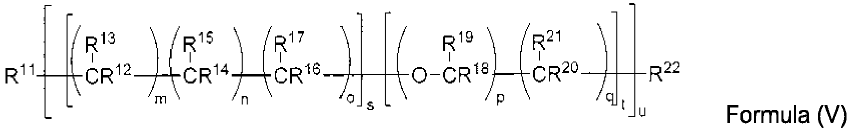 in which the following applies to the radicals simultaneously or independently of one another:
R¹¹, R²² are, simultaneously or independently of one another, hydrogen, -OH or C₁-C₁₀-alkyl;
R¹², R¹⁴, R¹⁶, R¹⁸, R²⁰ are, simultaneously or independently of one another, hydrogen, -OH or C₁-C₅-alkyl;
R¹³, R¹⁵, R¹⁷, R¹⁹, R²¹ are, simultaneously or independently of one another, hydrogen, -OH, -NH₂ or C₁-C₅-alkyl;
wherein
m, n, o, s, p, q, t are, simultaneously or independently of one another, a number from 0 to 10, and wherein
i) m, s, u, are, simultaneously or independently of one another, a number from 1 to 10, and/or
ii) p, t, u, are, simultaneously or independently of one another, a number from 1 to 10.

8. Liquid curing agent according to at least one of the preceding claims, **characterized in that** the curing agent further comprises d) at least one curing accelerator from the class of imidazolines according to formula (VI) or imidazoles according to formula (VII) 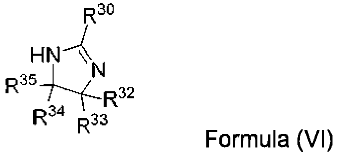 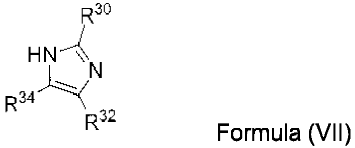 in which the following applies to the radicals simultaneously or independently of one another:
R³⁰ is, simultaneously or independently of one another, hydrogen, C₁-C₂₀-alkyl, C₃-C₂₀-cycloalkyl, aryl, arylalkyl;
R³², R³⁴ are, simultaneously or independently of one another, hydrogen, C₁-C₁₅-walkyl, C₃-C₁₅-cycloalkyl or together C₃-C₁₅-alkylene, by forming a ring;
R³³, R³⁵ are, simultaneously or independently of one another, hydrogen, C₁-C₁₅-walkyl, C₃-C₁₅-cycloalkyl or together C₃-C₁₅-alkylene, by forming a ring.

9. Liquid curing agent according to at least one of the preceding claims, **characterized in that** the curing agent further e) comprises a stabilizer selected from the group of inorganic or organic acids.

10. Liquid curing agent according to at least one of the preceding claims, **characterized in that** as the stabilizer comprises an inorganic or organic acid from the group of salicylic acid, phthalic acid, toluene sulfonic acid, sulfuric acid, phosphoric acid or their anhydrides or mixtures thereof.

11. Liquid curing agent according to at least one of the preceding claims, **characterized in that** the curing agent contains:
| | |
|---|---|
| 1 to 50 parts by weight of | cyanamide, |
| 1 to 50 parts by weight of | at least one urea derivative of the formula (II) and/or formula (IV), |
| 0.01 to 50 parts by weight of | at least one viscosity modifier |
| 0 to 10 parts by weight | of at least one curing accelerator from the class of imidazolines of the formula (VI) and/or the imidazoles of the formula (VII) and |
| 0 to 10 parts by weight | of at least one stabilizer. |

12. Epoxy resin composition, comprising:
a) at least one curable epoxy resin and
b) at least one liquid curing agent according to at least one of the preceding claims 1 to 11.

13. Compound material comprising
a) a fibre material,
b) at least one curable epoxy resin,
c) at least one liquid curing agent according to at least one of the preceding claims 1 to 11.

14. Use of liquid curing agents according to at least one of the preceding claims 1 to 11 for the curing of impregnated fibre materials or impregnated fabrics, knitted fabrics or meshes.

## Revendications

1. Durcisseur liquide pour le durcissement de résines époxy, comprenant
a) un cyanamide ;
b) au moins un dérivé d'urée de la formule (II) et/ou de la formule (IV) 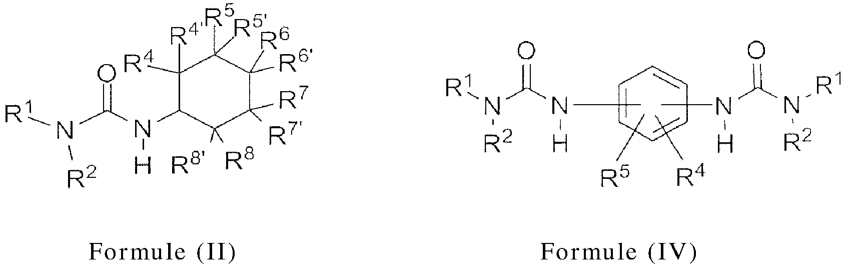 dans lesquelles les radicaux possèdent, simultanément ou indépendamment les uns des autres, les valeurs suivantes :
R¹ , R² = simultanément ou indépendamment l'un de l'autre, l'hydrogène, un alkyle en C₁ à C₁₅, un cycloalkyle en C₃ à C₁₅ ou ensemble avec formation d'un noyau, un alkylène en C₃ à C₁₀ ;
R⁴, R^{4'}, R⁵, R^{5'}, R⁶, R^{6'}, R⁷, R^{7'}, R⁸, R^{8'} = simultanément ou indépendamment les uns des autres, l'hydrogène, un alkyle en C₁ à C₁₅, un cycloalkyle en C₃ à C₁₅, -NHC(O)NR¹R² ou un alkyle en C₁ à C₁₅ substitué par -NHC(O)NR¹R² ;
et
c) au moins un modificateur de viscosité, choisi parmi le groupe des mono-, di- et/ou polyols, éthers, polyéthers, polyétherpolyols, cétones, aldéhydes, nitriles, esters d'acide carboxylique ou mélanges de ceux-ci.

2. Durcisseur liquide selon la revendication 1, **caractérisé en ce que** les radicaux dans la formule (II) et/ou dans la formule (IV) possèdent, simultanément ou indépendamment les uns des autres, les valeurs suivantes :
R¹ , R² = simultanément ou indépendamment l'un de l'autre, l'hydrogène ou un alkyle en C₁ à C₁₅ ;
R⁴, R^{4'}, R⁵, R^{5'}, R⁶, R^{6'}, R⁷, R^{7'}, R⁸, R^{8'} = simultanément ou indépendamment les uns des autres, l'hydrogène, un alkyle en C₁ à C₁₅, -NHC(O)NR¹R² ou un alkyle en C₁ à C₁₅ substitué par -NHC(O)NR¹R².

3. Durcisseur liquide selon la revendication 1 ou 2, **caractérisé en ce que** les radicaux dans la formule (II) possèdent les valeurs suivantes :
R¹ , R² = simultanément ou indépendamment l'un de l'autre, l'hydrogène ou un méthyle ;
R⁴, R^{4'}, R⁵, R^{5'}, R⁶, R^{6'}, R⁷, R^{7'}, R⁸, R^{8'} = simultanément ou indépendamment les uns des autres, l'hydrogène, un méthyle, un éthyle, -NHC(O)NR¹R² ou un méthyle ou un éthyle substitué par -NHC(O)NR¹R².

4. Durcisseur liquide selon la revendication 1 ou 2, **caractérisé en ce que** les radicaux dans la formule (IV) possèdent les valeurs suivantes :
R¹, R² = un méthyle ;
R4, R⁵ = simultanément ou indépendamment l'un de l'autre, l'hydrogène ou un alkyle en C₁ à C₁₅.

5. Durcisseur liquide selon au moins une des revendications précédentes, **caractérisé en ce que** le durcisseur présente un point de fusion Sₘ avec Sₘ < 20 °C (pression normale), ou est sous forme liquide et présente une viscosité inférieure à 1 Pa·s à une température de 20 °C (pression normale).

6. Durcisseur liquide selon au moins une des revendications précédentes, **caractérisé en ce que** le durcisseur comprend un modificateur de viscosité, qui présente de son côté un point d'ébullition d'au moins 100 °C.

7. Durcisseur liquide selon au moins une des revendications précédentes, **caractérisé en ce que** le durcisseur comprend au moins un modificateur de viscosité choisi dans le groupe des mono-, di- et/ou polyols, éthers, étheralcools, polyéthers ou polyétherpolyols ou des mélanges de ceux-ci selon la formule générale (V), 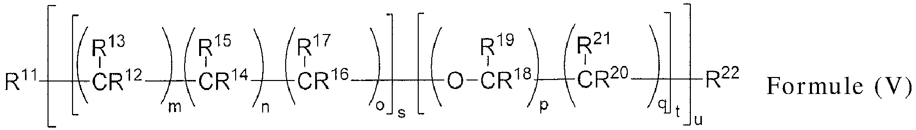 les radicaux possédant, simultanément ou indépendamment les uns des autres, les valeurs suivantes :
R¹¹, R²² = simultanément ou indépendamment l'un de l'autre, l'hydrogène , -OH ou un alkyle en C₁ à C₁₀ ;
R¹², R¹⁴, R¹⁶, R¹⁸, R²⁰ = simultanément ou indépendamment les uns des autres, l'hydrogène, -OH ou un alkyle en C₁ à C₅ ;
R¹³, R¹⁵, R¹⁷, R¹⁹, R²¹ = simultanément ou indépendamment les uns des autres, l'hydrogène, -OH, -NH₂ ou un alkyle en C₁ à C₅ ;
avec
m, n, o, s, p, q, t = simultanément ou indépendamment les uns des autres, un nombre de 0 à 10, et avec
i) m, s, u = simultanément ou indépendamment les uns des autres, un nombre de 1 à 10, et/ou
ii) p, t, u = simultanément ou indépendamment les uns des autres, un nombre de 1 à 10.

8. Durcisseur liquide selon au moins une des revendications précédentes, **caractérisé en ce que** le durcisseur comprend en outre d) au moins un accélérateur de durcissement appartenant à la catégorie des imidazolines selon la formule (VI) ou des imidazoles selon la formule (VII) 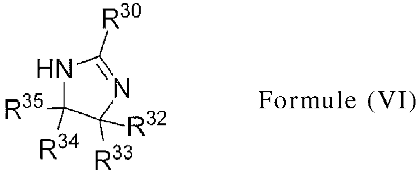 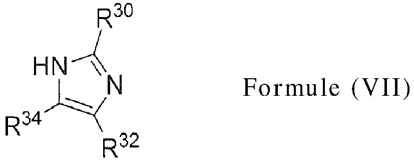 les radicaux possédant, simultanément ou indépendamment les uns des autres, les valeurs suivantes :
R³⁰ = simultanément ou indépendamment l'un de l'autre, l'hydrogène, un alkyle en C₁ à C₂₀, un cycloalkyle en C₃ à C₂₀, un aryle, un arylalkyle ;
R³², R³⁴ = simultanément ou indépendamment l'un de l'autre, l'hydrogène, un alkyle en C₁ à C₁₅, un cycloalkyle en C₃ à C₁₅ ou ensemble avec formation d'un noyau, un alkylène en C₃ à C₁₅ ;
R³³, R³⁵ = simultanément ou indépendamment l'un de l'autre, l'hydrogène, un alkyle en C₁ à C₁₅, un cycloalkyle en C₃ à C₁₅ ou ensemble avec formation d'un noyau, un alkylène en C₃ à C₁₅.

9. Durcisseur liquide selon au moins une des revendications précédentes, **caractérisé en ce que** le durcisseur contient en outre e) un stabilisant choisi parmi le groupe des acides inorganiques ou organiques.

10. Durcisseur liquide selon au moins une des revendications précédentes, **caractérisé en ce qu'**il contient comme stabilisant, un acide inorganique ou organique appartenant au groupe des acides salicylique, phtalique, toluènesulfonique, sulfurique, phosphorique, ou des anhydrides ou mélanges de ceux-ci.

11. Durcisseur liquide selon au moins une des revendications précédentes, **caractérisé en ce que** le durcisseur contient
1 à 50 parties en poids de cyanamide,
1 à 50 parties en poids d'au moins un dérivé d'urée de la formule (II) et/ou de la formule (IV),
0,01 à 50 parties en poids d'au moins un modificateur de viscosité, 0 à 10 parties en poids d'au moins un accélérateur de durcissement de la catégorie des imidazolines de la formule (VI) et/ou des imidazoles de la formule (VII) et
0 à 10 parties en poids d'au moins un stabilisant.

12. Composition de résine époxy comprenant
a) au moins une résine époxy durcissable et
b) au moins un durcisseur liquide selon au moins une des revendications 1 à 11 précédentes.

13. Matériau composite comprenant
a) un matériau à base de fibres
b) au moins une résine époxy durcissable
c) au moins un durcisseur liquide selon au moins une des revendications 1 à 11 précédentes.

14. Utilisation de durcisseurs liquides selon au moins une des revendications 1 à 11 précédentes pour le durcissement de matériaux à base de fibres imprégnés ou de tissus, de tissus tricotés ou de tissages imprégnés.
